(19) Europäisches Patentamt / European Patent Office / Office européen des brevets

(11) EP 2 792 707 B1

(12) EUROPÄISCHE PATENTSCHRIFT

(45) Veröffentlichungstag und Bekanntmachung des Hinweises auf die Patenterteilung:
**06.06.2018 Patentblatt 2018/23**

(21) Anmeldenummer: **14176622.0**

(22) Anmeldetag: **09.04.2009**

(51) Int Cl.:
*C08K 13/00 (2006.01)* *C08K 3/00 (2018.01)*
*C08K 5/00 (2006.01)* *C08K 3/22 (2006.01)*
*C08K 5/17 (2006.01)* *C08K 5/21 (2006.01)*
*C08K 13/02 (2006.01)* *C08K 3/26 (2006.01)*

# (54) Stabilisatorsysteme für halogenhaltige Polymere

Stabiliser systems for polymers containing halogens

Systèmes de stabilisateur pour polymères contenant de l'halogène

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.04.2008 DE 102008018872**

(43) Veröffentlichungstag der Anmeldung:
**22.10.2014 Patentblatt 2014/43**

(62) Dokumentnummer(n) der früheren Anmeldung(en) nach Art. 76 EPÜ:
**09157705.6 / 2 110 405**

(73) Patentinhaber: **IKA Innovative Kunststoffaufbereitung Gmbh & Co.Kg**
**06766 Wolfen (DE)**

(72) Erfinder:
- **Hacker, Peter**
  **80995 München (DE)**
- **Beck, Reinhard**
  **86926 Greifenberg (DE)**

(74) Vertreter: **Büchel, Edwin**
**Isenbruck Bösl Hörschler LLP**
**Patentanwälte**
**Eastsite One**
**Seckenheimer Landstraße 4**
**68163 Mannheim (DE)**

(56) Entgegenhaltungen:
**EP-A1- 0 945 483** **WO-A1-92/13914**
**WO-A1-2004/096904** **DE-A1- 3 843 581**

- **LEROUX F ET AL: "Polymer Interleaved Layered Double Hydroxide: A New Emerging Class of Nanocomposites", CHEMISTRY OF MATERIALS, AMERICAN CHEMICAL SOCIETY, US, Bd. 13, Nr. 10, 1. Oktober 2001 (2001-10-01), Seiten 3507-3515, XP002473199, ISSN: 0897-4756, DOI: 10.1021/CM0110268**
- **Anonymous: "Amine - Wikipedia, the free encyclopedia", , 2 October 2016 (2016-10-02), XP055307674, Retrieved from the Internet: URL:https://en.wikipedia.org/wiki/Amine [retrieved on 2016-10-05]**

EP 2 792 707 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Stabilisatorsysteme für halogenhaltige Polymere sowie Zusammensetzungen und Gegenstände die Stabilisatorsysteme enthaltend und Verfahren zur Stabilisierung eines halogenhaltigen Polymers.

Bekanntermaßen neigen halogenhaltige Kunststoffe bei thermischer Belastung während der Verarbeitung oder im Langzeitgebrauch zu unerwünschten Zersetzungs- und Abbaureaktionen. Dieses Problem kann durch den Einsatz von metallhaltigen Stabilisatoren gelöst werden, die den halogenhaltigen Polymeren vor oder während der Verarbeitung zugegeben werden. Zu den bekannten Stabilisatoren zählen Barium-Cadmium-, Blei-, Organozinn- und Barium-Zink-Stabilisatoren. Alle diese Stabilisatorgruppen sind jedoch schwermetallhaltig oder enthalten toxikologisch bedenkliche Metalle, was nachteilig im Hinblick auf deren Umweltverträglichkeit ist.

Aus besagten Gründen wurden in den letzten Jahren zunehmend schwermetallfreie sogenannte organische Systeme erarbeitet, die auch bereits vermarktet werden. Diese sind den festen Stabilisatoren zuzuordnen und werden aus Gründen der Umweltfreundlichkeit großenteils in kompaktierter Form gehandelt. Diese organisch basierten Systeme sind Mehrkomponentenmischungen, deren Hauptbestandteil meist der Substanzgruppe der Hydrotalcite (Magnesium-Aluminium-Hydroxycarbonate) zuzuordnen ist.

Schwermetallfreie Hydrotalcit- bzw. Hydrocalumit (Katoit)- Zusammensetzungen mit PVC-Thermostabilisatorfunktion werden beispielsweise in EP 1 046 668 B1 und EP 0930 332 B1 beschrieben.

Diese Verbindungsklassen sind jedoch relativ teuer und nur in eingeschränktem Maße verwendbar, da die natürlich vorkommenden Formen entweder nicht in ausreichender Menge vorhanden oder durch schwermetallhaltige Gangarten, hauptsächlich Eisen- und Mangancarbonate, verunreinigt sind. Diese Verunreinigungen reduzieren die Stabilisatorwirkung in PVC drastisch.

Es muss deshalb auf synthetische Verfahren zugegriffen werden, die einen breiteren Zugang zu diesen Substanzklassen ermöglichen. Die Herstellung im industriellen Maßstab ist jedoch rohstoffbedingt kostenungünstig. Die Produktion ist ferner wegen der einzusetzenden Magnesium-, Calcium- und Aluminiumsalze mit einem erheblichen Abwasserballast verbunden. Dieses Faktum kann bei einem großindustriellen Syntheseverfahren nicht außer Acht bleiben. Daher ist die Suche nach preisgünstigeren Substanzen weiterhin erforderlich. Der Zugang zu ihnen sollte möglichst mit Ressourcenschonung und Umweltverträglichkeit verbunden sein.

In den letzten Jahren konnte dieses Ziel bereits teilweise erreicht werden, indem chemisch modifizierte Dolomite angeboten wurden, die durch Calcinierung veredelt sind, da Dolomite als solche keine Stabilisatorfunktion aufweisen. Der Zugang zu diesen Verbindungen beruht auf halbsynthetischen Verfahren, da natürlich vorkommende Mineralien als Ausgangsbasis verwendet werden können. Diese Mineralien (Dolomite) stehen in gewaltigen Mengen und oft in genügender Reinheit zur Verfügung, so dass auf eine weitere mit Abwasserballasten verbundene Aufreinigung verzichtet werden kann. Die Produkt- und Performance-Qualitäten sind durch verschiedene Zusätze verbessert worden.

Publikationen hierzu finden sich in EP-A 0 422 335 und EP-A 0 945 483. Ein halbsynthetisches Produktionsverfahren ist in US-A 2006/188428 veröffentlicht.

EP 0945483 A1 offenbart eine Kombination von Dolomitenverbindungen in Kombination mit Stabilisatoren, welche Zinksalze von organischen Säuren sind.

WO 2004/096904 A1 offenbart Mischungen aus mindestens einem Alkanolamin und mindestens einem Sulfatestersalz oder einem Sulfonatsalz.

WO 9213914 A1 offenbart Verbindungen vom Hydrocalumit-Typ der Formel $AlCa_x(OH)_{2x+3} * mH_2O$, die mit Isocyanurat kombiniert werden können.

DE 3843581 A1 offenbart eine thermoplastische Harzzusammensetzung mit verbesserter thermischer Stabilität, welche ein Halogen enthaltendes thermoplastisches Harz (A), eine Metallseife (B), ein Ethylen/Vinylazetat-Copolymer-Hydrolysat (C) und eine feste Lösung (D) vom Hydrotalcit-Typ enthält.

XP 002473199 offenbart ein System von zwei Komponenten, einem Polymer und einem 2D Host-Material, insbesondere einem geschichteten Doppel-Hydroxid (LDH), auf welches als natürlicher Hydrotalcit Bezug genommen wird.

Die bisher zur Verfügung gestellten Stabilisatorkombinationen, die calcinierte Dolomite enthalten, sind jedoch in ihrer Mehrheit noch immer schwermetallhaltig bzw. weisen noch immer einen zu hohen Schwermetallanteil auf oder sind in ihrer Performance nicht voll befriedigend.

Es besteht also weiterhin Bedarf nach alternativen, preisgünstigen und hochwirksamen Stabilisatorsystemen.

Eine Aufgabe der vorliegenden Erfindung besteht somit in der Bereitstellung solcher Stabilisatorsysteme.

Die Aufgabe wird gelöst durch ein Stabilisatorsystem für halogenhaltige Polymere enthaltend einen Erdalkali-Doppelcarbonat-Kalk der Formel (A)

$$(M^1O)_m{}^*(M^2O)_{n-m}{}^*(CO_2)_o{}^*(H_2O)_p \qquad (A)$$

mit

$M^1$ und $M^2$ = verschiedene Erdalkalimetalle;
m = 0,9 bis 1,1;
n = 1,9 bis 2,1 und p = 0 bis 2,1 oder n = 3,9 bis 4,1 und p = 0 bis 4,1;
o = 0 bis 1,1

und mindestens eine der Verbindungen ausgewählt aus der Gruppe bestehend aus **(B1)** und **(C),** wobei

**(B1)** ein Tris-alkanol-isocyanurat ist und
**(C)** ein Erdalkali-alumohydroxocarbonat der Formel **(C)**

$$Ca_yAl_2(OH)_{4+2y}CO_3{*}zH_2O \qquad \textbf{(C)}$$

mit y = 2 bis 8 und z = 0 bis 12 ist.

Die erfindungsgemäßen Systeme dienen der Stabilisierung eines halogenhaltigen Polymers, wobei ein chlorhaltiges Polymer, insbesondere PVC, bevorzugt ist.

Bei den Erdalkali-Doppelcarbonat-Kalken der Formel **(A)** handelt es sich bevorzugt um Dolomit- oder Huntitkalke, die aus natürlich vorkommenden oder synthetischen Dolomiten oder Huntiten gewonnen werden, wobei das natürlich vorkommende Material bevorzugt ist.

Ein bevorzugter Gegenstand der vorliegenden Erfindung ist somit ein erfindungsgemäßes Stabilisatorsystem, wobei der Erdalkali-Doppelcarbonat-Kalk **(A)** ein Huntitbranntkalk der Formel **(A1)**

$$(CaO)_m{*}(MgO)_{n-m}{*}(CO_2)_o \qquad \textbf{(A1)}$$

mit m = 0,9 bis 1,1; n = 3,9 bis 4,1 und o = 0 bis 1,1 ist.

Ein weiterer bevorzugter Gegenstand der vorliegenden Erfindung ist ein erfindungsgemäßes Stabilisatorsystem, wobei der Erdalkali-Doppelcarbonat-Kalk **(A)** ein Dolomitbranntkalk der Formel **(A2)**

$$(CaO)_m{*}(MgO)_{n-m}{*}(CO_2)_o \qquad \textbf{(A2)}$$

mit m = 0,9 bis 1,1; n = 1,9 bis 2,1 und o = 0 bis 1,1 ist

Die Gewinnung erfolgt durch Calcinieren (Brennen) bei 550 bis 1200 °C. Die Brennzeiten betragen bevorzugt 10 bis 20 Stunden. Der Branntkalk kann anschließend durch Reaktion mit Wasser zum Löschkalk hydratisieren, wobei die Löschung partiell oder gänzlich erfolgen kann. Die Temperaturen für die Naßbehandlung liegen bevorzugt bei 60 bis 95 °C, die Reaktionszeiten bei 40 bis 100 Stunden. Das Brennen kann in zwei Stufen stattfinden.

**Stufe 1:** gänzliche Calcinierung zu Magnesiumoxid, wobei Calcium-Magnesium-Oxid-Carbonat der Zusammensetzung:

$$MgO{*}CaCO_3 \qquad \textbf{(A4)}$$

(CAS-Nr.: 83897-84-1) entsteht. Die Verwendung dieser Substanz ist bevorzugt.
Dieser halbgebrannte Dolomit wird auch als Magnomasse oder Akdolit bezeichnet. Dieser enthält ein sehr reaktionsfähiges Magnesiumoxid (Ullmann's Enzyklopädie der technischen Chemie, Verlag Schwarzenberg/Minden-Berlin, 3. Aufl. (1960), Bd. 12, S. 125).
Beim Löschen mit Wasser wird Hydromagnocalcit :

$$Mg(OH)_2{*}CaCO_3$$

erhalten, der ebenfalls bevorzugt verwendet werden kann.
**Stufe 2:** partielles oder gänzliches Brennen zu Calciumoxid. Die Verwendung der durch gänzliche Calcinierung zu Calcium-Magnesium-Dioxid (Doppeloxid) entstandenen Substanz der Zusammensetzung:

$$CaMgO_2 \qquad \textbf{(A3)}$$

(CAS-Nr.: 37247-91-9) ist ganz besonders bevorzugt.

Diese Substanz besitzt ein metastabiles Kristallgitter, da die entstandenen Calciumoxid- und Magnesiumoxid-Mikrokristalle aufgrund ihrer regelmäßigen Anordnung sich gegenseitig am Kristallwachstum hindern (Ullmann's Encyclopaedia of Ind. Chem., Verlag-Chemie, Weinheim, 5th Ed., Vol. 15, p. 611).

Je nach Beimengungen (Gangarten) werden Grau- oder Weißkalke erhalten. Das partielle Löschen kann anschließend bis zum Entstehen einer krümmeligen Masse erfolgen. Die Feststoffe werden am Ende des Verfahrens zu einem feinen Pulver vermahlen, das mit Fettsäuren, bevorzugt Palmitin- oder Stearinsäure, gecoatet werden kann.

Grundsätzlich sind gecoatete Verbindungen bevorzugt. Deren Herstellung ist im Stand der Technik bekannt. So werden beispielsweise Coatings auch in EP-A 0 422 335 hergestellt.

Ein weiterer bevorzugter Gegenstand er vorliegenden Anmeldung ist ein erfindungsgemäßes Stavilisatorsystem, bei dem wenigstens eine Verbindung **(A)**, **(A1)**, **(A2)**, **(A3)** und **(A4)** in gecoateter Form vorliegt.

Da sich das Kristallgitter des Dolomites und Huntites vom Kristallgitter des Calcites (Calciumcarbonat) umd Magnesites (Magnesiumcarbonat) dadurch unterscheiden, dass im Doppelcarbonat Dolomit in Schichten abwechselnd $CaO_6$- und $MgO_6$-Oktaeder mit eingelagerten Carbonatanionen vorliegen, ist die Struktur des Branntkalkes ($CaMgO_2$) gegenüber Calciumoxid (CaO) und Magnesiumoxid (MgO), die beide im Kochsalzgitter kristallisieren, verändert. Durch den Calcinierungsprozess resultieren also veränderte Strukturen mit alternierenden Calciumoxid- und Magnesiumoxid-Ebenen.

Das Kristallgitter des Huntites ist relativ kompliziert, da hier $CaO_6$-Oktaeder und $CaO_6$-Trigonalprismen neben $MgO_6$-Octaedern vorliegen (s. Dolomit- und Huntitkristallstrukturen in: Mineral Structure Data Base, University of Colorado; Dollase W. A., Am. Mineral. 71, 163 [1986]). Da beim Brennen die Gitterplätze der Calcium- und Magnesiumionen erhalten bleiben, ist auch die Struktur dieses Branntkalks gänzlich anders als bei Calcium- und Magnesiumoxid.

Ein weiterer Hinweis für die Variation des Kristallgitters ergibt sich auch daraus, dass Mischungen aus Calcium- und Magnesiumoxid, die summarisch den Dolomit- und Huntitbranntkalken entsprechen, im Allgemeinen gegenüber diesen eine schwächere Performance aufweisen. Dies deutet darauf hin, dass durch Calcinierungsprozesse Kristallgitter in besonders reaktiven Formen entstehen, da größervolumige Carbonatanionen durch kleinvolumige Oxidanionen ersetzt werden und also quasi Leerstellen in den Kristallgittern vorliegen. Diese Kristallgitter weisen aufgrund von Gitterfehlern (Defektstellen, Gitterdehnungen und Gitterdesorientierungen) höhere Energieinhalte verbunden mit Metastabilität auf, was die erhöhte Aktivität der Stabilisatorkomponenten begründet (Ullmann's Enzyklopädie der technischen Chemie, Verlag Schwarzenberg/Minden-Berlin, 3. Aufl. (1960), Bd. 12, S. 125).

Bevorzugter Erdalkali-Doppelkarbonat-Kalk sind Dolomit- oder Huntitbranntkalk. Besonders bevorzugt ist Dolomitbranntkalk, wobei Calcium-Magnesiumdioxid **(A3)** ganz besonders bevorzugt ist. Der Konzentrationsbereich liegt im halogenhaltigen Polymer vorzugsweise bei 0,05 bis 10 Gew.-Teilen pro 100 Gew.-Teile Polymer. Besonders bevorzugt werden 0,1 bis 5 Gew.-Teile eingesetzt.

Die Komponenten bzw. Verbindungen **(B1)** zeichnen sich dadurch aus, dass sie stickstoffhaltig sind. In dem erfindungsgemäßen System kann eine Verbindung oder es können mehrere Verbindungen **(B1)** vorhanden sein. Gleiches gilt für **(A)** und **(C).**

Allgemein zeichnet sich das erfindungsgemäße System dadurch aus, dass dieses mindestens **(A)** und **(B1)** oder **(A)** und **(C)** enthält. Sofern mehr als zwei, beispielsweise drei oder vier Verbindungen aus **(A)**, **(B1)**, **(C)** und gegebenenfalls weiteren Verbindungen vorhanden sind, ist bevorzugt, dass **(A)**, **(B1)** und **(C)** vorhanden sind.

Die Komponente bzw. Verbindung **(B1)** ist ein Tris-alkanol-isocyanurat. Es können ein oder mehrere dieser Stoffe eingesetzt werden.

Ebenfalls offenbart sind tert. Alkanolamine, wobei tert. Ethanolamine der Formel **(B1-a1)** bevorzugt sind:

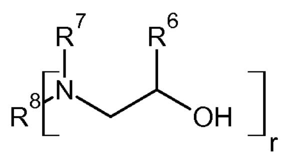

**(B1-a1)**

mit r = 1 oder 2, $\mathbf{R^6}$ = $C_1$-$C_{12}$-Alkyl oder $CH_2OR^9$; $\mathbf{R^7}$, $\mathbf{R^8}$ = unabhängig von einander $C_1$-$C_{22}$-Alkyl, $C_3$-$C_{22}$-Alkenyl und $CH_2CHR^{6a}$-OH; $\mathbf{R^9}$ = $C_1$-$C_{20}$-Alkyl, $C_3$-$C_{18}$-Alkenyl und $R^{10}OCH_2CHR^{6a}OH$-$N(R^7)(R^8)$; $R^{6a}$ = $C_1$-$C_{12}$-Alkyl; $\mathbf{R^{10}}$ = $C_2$-$C_{10}$-Alkylen oder 1,4-Dimethylol-cyclohexan-diyl, wobei bei **r** = 1, $\mathbf{R^7}$ und $\mathbf{R^8}$ zusammen zusätzlich $-(CH_2)_4-$, - $(CH_2)_5-$, $-(CH_2)_2O(CH_2)_2-$, $-(CH_2)_2-N(CH_2CHR^6-OH)-(CH_2)_2-$ und $-CON(CH_2CHR^6-OH)-CON(CH_2CHR^6-OH)CO-$ und bei **r** = 2, $\mathbf{R^8}$ außerdem = $C_2$-$C_{11}$-Alkylen, das durch 1 bis 3 $N(CH_2CHR^6-OH)$-Gruppen unterbrochen sein kann oder 1,4-Dimethylol-cyclohexan-diyl ist.

Es bedeuten $C_1$-$C_{22}$-Alkyl bevorzugt: Methyl, Ethyl, Propyl, Isopropyl, Butyl, Isobutyl, sec.-Butyl, tert.-Butyl, Pentyl, Isopentyl, Hexyl, Heptyl, Octyl und Decyl (mit Isoformen), Undecyl, Dodecyl, Tridecyl, Tetradecyl, Hexadecyl, Octadecyl, Eicosyl und Docosyl; $C_3$-$C_{22}$-Alkenyl: bevorzugt Allyl und Oleyl; $C_2$-$C_{11}$-Alkylen: bevorzugt Ethylen, Propylen,

Isopropylen, Butylen, Isobutylen, Pentylen, Hexylen, Octylen, Decylen und Undecylen.

Verbindungen der Formel **(B1)** sind Trisalkanolisocyanurate (Umsetzungsprodukte von Cyanursäure mit Alkenoxiden).

Bevorzugt ist Trishydroxyethyl-isocyanurat (THEIC).

Offenbart wird ebenfalls die Komponente bzw. Verbindung **(B2), welche** vorzugsweise mindestens ein substituiertes Aminouracil, ein Aminocrotonsäureester oder ein substituierter Harnstoff ist. Es können ein oder mehrere dieser Stoffe eingesetzt werden.

Die Enaminone **(B2-a)** weisen allesamt das Strukturelement $R^4$NH-C=CH-CO- auf.

Zu ihnen gehören die Enaminoester **(B2-a1)** (Aminocrotonester) und die Aminopyrimidinone **(B2-a2)** und **(B2-a3)** (Aminouracile), wobei diese bevorzugt durch folgende Strukturen beschrieben werden:

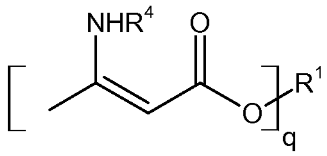

**(B2-a1)**

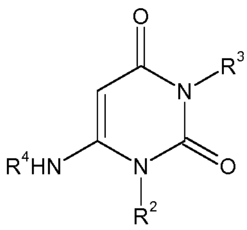

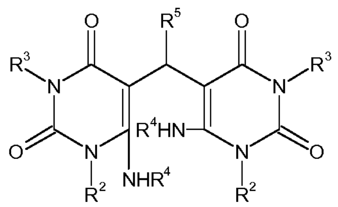

**(B2-a2)** **(B2-a3)**

Zu den substituierten Harnstoffen **(B2-b)** gehören die Phenylharnstoffe **(B2-b1)** und **(B2-b2)** sowie die Cyanacetylharnstoffe **(B2-b3),** die durch folgende Strukturformeln beschrieben werden können:

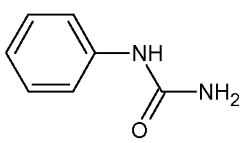

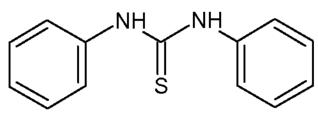

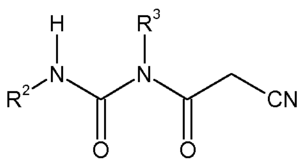

**(B2-b2)** **(B2-b2)** **(B2-b3)**

worin

**$R^1$** = unverzweigtes oder verzweigtes $C_2$-$C_{20}$-Alkylen, das durch 1 bis 4 O- oder S- Atome unterbrochen oder/und durch 1 bis 4 OH-Gruppen substituiert sein kann, oder 1,4-Dimethylol-cyclohexan-diyl, Polyethylen(oder -propylen)glykol-$\alpha$, $\omega$-diyl (vorzugsweise ist Poly = Tetra bis Deka), Polyglyceryl -$\alpha$,$\omega$-diyl (vorzugsweise ist Poly = Tetra bis Deka) oder Glycerin-triyl, Trimethylolethan(oder -propan)-triyl, Pentaerythrit-tri(oder -tetra)yl, Bistrimethylolethan(oder -propan)-tri(oder -tetra)yl, Diglycerin-tri(oder tetra)yl, Tetrit-tetrayl, Triglycerin-tri(oder -tetra, -penta)yl, Pentit-pentayl, Dipentaerythrit-penta(oder -hexa)yl und Hexit-hexayl; und

**q** = 2-6.

**$R^2$** = $C_1$-$C_{20}$-Alkyl, $C_3$-$C_6$-Alkenyl, $C_7$-$C_9$-Phenylalkyl, unsubstituiertes oder mit 1 bis 3 $C_1$-$C_4$-Alkyl-, $C_1$-$C_4$-Alkoxy- oder Hydroxygruppen substituiertes Phenyl

**$R^3$** = $R^1$ oder Wasserstoff.

**$R^4$** = Wasserstoff, Hydroxy-$C_2$-$C_4$-Alkyl, Hydroxyphenyl, $C_1$-$C_4$-Alkoxyphenyl

**$R^5$** = $C_1$-$C_{20}$-Alkyl

Es bedeuten bevorzugt: $C_3$-$C_6$-Alkenyl: Allyl, Butenyl und Hexenyl; $C_7$-$C_9$-Phenylalkyl: Benzyl und Phenetyl; durch Hydroxygruppen subst. Phenyl: o- und p-Hydroxyphenyl; $C_1$-$C_4$-Alkoxy: Methoxy und Ethoxy; durch $C_1$-$C_4$-Alkoxy subst. Phenyl: o-Methoxy- und p-Methoxyphenyl. Weitere Definitionen siehe unter **(B1).**

Die Substanzklassen **(B2-a2)** und **(B2-a3)** sind teils kommerziell verfügbar oder deren Synthese ist näher beschrieben in EP 0768 336, EP 1 510 545, EP 0 967 209, EP 0 967 208, EP 0 962 491 und EP 1 044 968. Vertreter zu den Strukturen **(B2-a1)** sind im Handel erhältlich oder, wie in EP 433 230 beschrieben, herstellbar. Produkte der Formel **(B2-b3)** sind ebenfalls in Handel erhältlich. Ihre Synthese ist beispielhaft in EP 0 962 491 publiziert.

Bevorzugte Verbindungen der Formel **(B2-a1)** sind Bis-1,4-butandiyl-3-aminocrotonat oder Bis-thiodiethandiyl-3-aminocrotonat.

Bevorzugte Aminouracile der Formeln **(B2-a2)** und **(B2-a3)** sind 6-Amino-1,3-dimethyluracil, 6-Amino-1-octyluracil, 6-Amino-1,3-dibenzyluracil, 6-(2-Hydroxyanilino)-1,3-dimethyluracil, 6-(2-Methoxyanilino)-1,3-dimethyluracil, 5,5'-Heptyliden-bis-6-amino-1,3-dimethyluracil, 5,5'-Octyliden-bis-6-amino-1,3-dimethyluracil und 5,5'-Dodecyliden-bis-6-amino-1,3-dimethyluracil. Besonders bevorzugt sind 6-Amino-1,3-dimethyluracil und 5,5'-Dodecyliden-bis-6-amino-1,3-dimethyluracil.

Bevorzugte Harnstoffe der Formel **(B2-b3)** sind Cyanacetyl-1,3-dialkyl(dibenzyl)harnstoffe, wovon Cyanacetyl-1,3-dimethylharnstoff besonders bevorzugt ist.

Der Konzentrationsbereich für die Komponenten **(B1)** und **(B2)** liegt vorzugsweise bei 0,05 bis 10 Gew.-Teilen, weiter bevorzugt bei 0,05 bis 5 Gew.-Teilen, weiter bevorzugt 0,3 bis 3 Gew.-Teilen der Verbindung bezogen auf 100 Gew.-Teile halogenhaltiges Polymer.

Die Komponente bzw. Verbindung **(C)** ist den Erdalkali-alumohydroxocarbonaten zuzuordnen, die durch folgende Formel beschrieben werden können:

$$Ca_yAl_2(OH)_{4+2y}CO_3{*}zH_2O \qquad \textbf{(C)}$$

mit y = 2 bis 8 und z = 0 bis 12.

Offenbart werden auch Hydrotalcite (Mg/Al- und Mg/Zn/Al-haltig).

Die Komponente bzw. Verbindung **(C)** ist ein Calciumcarbonato-hydroxodialuminat **(C).** Es können ein oder mehrere dieser Stoffe eingesetzt werden.

***Hydrotalcite***

Die chemische Zusammensetzung dieser Verbindungen ist dem Fachmann bekannt, z.B. aus den Druckschriften PS - DE 38.43.581 A1, US 4.000.100, EP 0.062.813 A1 und WO 93/20135 und PS - DE 102.17.364 A1 (Fa. Süd-Chemie). Sie besitzen folgende Zusammensetzung:

$$(Mg_{1-x}Zn_x)_yAl_2(OH)_{4+2y}CO_{3*}zH_2O \qquad \textbf{(C1)}$$

mit x = 0 bis 0,5; y = 2 bis 8 und z = 0 bis 12.

Beispiele hierfür sind:
$Al_2O_3{*}6MgO{*}CO_2{*}12H_2O$, $Mg_{4,5}Al_2(OH)_{13}{*}CO_3{*}3,5H_2O$, $4MgO{*}Al_2O_3{*}CO_2{*}9H_2O$, $4MgO{*}Al_2O_3{*}CO_2{*}6H_2O$, $ZnO{*}3MgO{*}Al_2O_3{*}CO_2{*}8\text{-}9H_2O$ und $ZnO{*}3MgO{*}Al_2O_3{*}CO_2{*}5\text{-}6H_2O$

Besonders bevorzugt sind die Typen Alcamizer 1 und 2, Alcamizer P 93-2 (Alcamizer 4) (Hersteller Kyowa Chemical Ind. Co., JP) und Sorbacid 911 (Hersteller SÜD-CHEMIE, DE). Ganz besonders bevorzugt werden entwässerte Hydrotalcite eingesetzt.

*Calciumcarbonato-hydroxodialuminate*

Calciumcarbonato-hydroxodialuminate (CAHC) sind neue synthetische Mineralien, die in PVC Costabilisatorfunktion aufweisen (ADDCON 2007 3/6.09.2007, Frankfurt/M). Sie lassen sich durch folgende idealisierte Formel beschreiben:

$$Ca_4Al_2(OH)_{12}CO_{3*}zH_2O \qquad \textbf{(C2)}$$

Durch Zusatz von Calcium-Magnesium-Dioxid ist hier ebenso wie bei Hydrotalciten eine synergistische Performance-Steigerung möglich. Hersteller und Anbieter ist die Fa. NABALTEC AG, DE. Das Produkt wird unter dem Namen ACTILOX CAHC vertrieben.

Die Verbindungen **(C)** können im Polymer zu 0,005 bis 9 Gew.-Teile auf 100 Gew.-TeilePolymer enthalten sein. Bevorzugt sind 0,05 bis 5 Gew.-Teile, ganz besonders bevorzugt 0,5 bis 3 Gew.-Teile.

Besonders bevorzugt sind folgende Kombinationen:
**(A3 oder A4)** + **(B1-a2), (A3 oder A4)** + **(B1-a3)** und **(A3 oder A4)** + **(B1-b3) (A3 oder A4)** + **(B1-a2)** + **(C1), (A3 oder A4)** + **(B1-a3)** + **(C1) und (A3 oder A4)** + **(B1-b3)** + **(C1), (A3 oder A4)** + **(B1-b3)** + **(C2), (A3 oder A4)** + **(B1-a3)** + **(C1)** sowie **(A3 oder A4)** + **(C1)** und **(A3 oder A4)** + **(C2),** die zusätzlich Trishydroxyethylisocyanurat (THEIC) enthalten.
Ganz besonders bevorzugt sind die Kombinationen **(A3 oder A4)** + Trishydroxyethylisocyanurat.
Gegebenenfalls kann das erfindungsgemäße Stabilisatorsystem noch weitere Zusatzstoffe aufweisen, wie:

- Zeolithe, Dawsonite und Schichtgitterverbindungen
- Catena-μ,-2,2',2"-nitrilotrisethanol-perchlorato (-triflato)-Natrium- oder Lithium-Innerkomplexe bzw. Lithium- oder Natriumperchlorate (-triflate) in gelöster bzw. geträgerter Form
- Fettsaure Calcium- oder Zinksalze (Calcium- oder Zinkseifen)
- Polyole und Zuckeralkohole und/oder 1,4-Dihydropyridin-Derivate (DHP)
- Lineare oder cyclische β-Diketone bzw. β-Ketoester und deren Calcium-, Magnesium- oder Zinksalze
- Phosphorigsäureester (Phosphite) und sterisch gehinderte Amine
- Glycidylverbindungen und epoxidierte Fettsäureester
- Antioxidantien, UV-Absorber und optische Aufheller
- Pigmente und Biozide
- Füllstoffe und Treibmittel
- Gleitmittel und Weichmacher
- Flammschutzmittel und Rauchverminderer

*Zeolithe*

Sie können durch die Formel $M_{x/n}[(AlO_2)_x(SiO_2)_y]$*w $H_2O$ beschrieben werden, worin n die Ladung des Kations M; M ein Element der ersten oder zweiten Hauptgruppe, wie Li, Na, K oder $NH_4$ sowie Mg, Ca, Sr oder Ba; y:x eine Zahl von 0,8 bis 15, bevorzugt von 0,8 bis 1,2; und w eine Zahl von 0 bis 300, bevorzugt von 0,5 bis 30, ist.

Beispiele für Zeolithe sind Natriumalumosilikate der Formeln

$Na_{12}Al_{12}Si_{12}O_{48}$ * 27 $H_2O$ [Zeolith A], $Na_6Al_6Si_6O_{24}$*2 NaX * 7,5 $H_2O$, X=OH, Halogen, $ClO_4$ [Sodalith]; $Na_6Al_6Si_{30}O_{72}$ * 24 $H_2O$; $Na_8Al_8Si_{40}O_{96}$*24 $H_2O$; $Na_{16}Al_{16}Si_{24}O_{80}$*16$H_2O$; $Na_{16}Al_{16}Si_{32}O_{96}$*16$H_2O$; $Na_{56}Al_{56}Si_{136}O_{384}$*250$H_2O$ [Zeolith Y], $Na_{86}Al_{86}Si_{106}O_{384}$*264 $H_2O$ [Zeolith X]; $Na_2O$, $Al_2O_3$, (2-5)$SiO_2$, (3,5-10)$H_2O$ [Zeolith P]; $Na_2O$, $Al_2O_3$, 2$SiO_2$, * (3,5-10) $H_2O$ (Zeolith MAP); oder die durch teilweisen bzw. vollständigen Austausch der Na-Atome durch Li-, K-, Mg-, Ca-, S r- oder Zn-Atome darstellbaren Zeolithe wie $(Na,K)_{10}Al_{10}Si_{22}O_{64}$ * 20 $H_2O$; $Ca_{4,5}Na_3[(AlO_2)_{12}(SiO_2)_{12}]$ * 30 $H_2O$; $K_9Na_3[(AlO_2)_{12}(SiO_2)_{12}]$ * 27$H_2O$. Ganz besonders bevorzugt sind Na-Zeolith A und Na-Zeolith MAP (siehe auch PS - US 6,531,533). Ebenso bevorzugt sind Zeolithe mit äußerst geringer Teilchengröße, insbesondere vom Na-A- und Na-P-Typ, wie sie auch in PS - US 6.096.820 beschrieben sind.

*Schichtgitterverbindungen*

Zu ihnen gehören Titania-Hydrotalcite (Al/Mg/Ti/Carbonat-haltig), Lithium-Hydrotalcite (Li/Al/Carbonat- oder Li/Mg/Al/Carbonat-basiert) und Calcium-Aluminium-Hydroxo-Hydrogenphosphite, wie beschrieben in PS-DE 44.25266 A1 (Fa. Metallgesellschaft), PS - EP 0.549.340 A1 (Fa. Mizusawa Ind. Chem.) und PS - JP 0.761.756 A1 (Fuji Chem. Ind.). Sie können durch die folgende allgemeine Formel:

$$M^{2+}{}_{1-x}M^{3+}{}_{x}(OH)_2(A^n)_{x/b}{}^{*}dH_2O$$

beschrieben werden, wobei

> $M^{2+}$ = als Kation eines oder mehrere der Metalle aus der Gruppe Mg, Ca, Sr, Zn oder Sn ist, $M^{3+}$ = als Kation A1 oder B ist, $A^n$ ein Anion mit der Valenz -n darstellt,
> b = n eine Zahl von 1-2 ist, 0 < x < 0,5 ist, d eine Zahl von 0-20 ist. Bevorzugt sind Verbindungen mit
> $A^n$ = OH, $ClO_4^-$, $HCO_3^-$, $CH_3COO^-$, $C_6H_5COO^-$, $CO_3^{2-}$, $(CHOHCOO)_2^{2-}$, $(CH_2COO)_2^{2-}$, $CH_3CHOHCOO^-$, $HPO_3^-$ oder $HPO_4^{2-}$.

**Titania-Hydrotalcite**

Titanhaltige Hydrotalcite sind in PS - WO 95/21127 beschrieben. Verbindungen dieser Art mit der allgemeinen

Formel $Al_aMg_bTi_c(OH)_d(CO_3)_e$*m $H_2O$, wobei a:b = 1:1 bis 1:10; $2 \leq b \leq 10$; $0<c<5$; $0 \leq m<5$ betragen und d und e so gewählt sind dass ein basisches, ladungsfreies Molekül entsteht, können ebenfalls verwendet werden.

**Lithium-Hydrotalcite**

Lithium-Aluminium-Schichtgitterverbindungen haben die allgemeine Formel:

$$Li_aM^{II}_{(b-2a)}Al_{(2+a)}OH_{(4+2b)(}A^{n-})_{(2/n)}* \ mH_2O$$

worin

$M^{II}$ Mg, Ca oder Zn und
$A^n$ ein ausgewähltes Anion der Wertigkeit n oder ein Gemisch von Anionen ist und die Indizes im Bereich von

$$0 < a < (b-2)/2,$$

$$1<b<6$$

und
m = 0 bis 30

liegen mit der Einschränkung, dass (b-2a) >2 ist oder die allgemeine Formel:

$$[Al_2(Li_{(1-x)}.M^{II}_x)(OH)_6]_n(A^{n-})_{(1+x)} * \ m \ H_2O$$

worin

$M^{II}$, A, m und n die obige Bedeutung haben und
x die Bedingung erfüllt $0{,}01 \leq x < 1$

Die Herstellung der genannten Schichtgitterverbindungen ist dadurch gekennzeichnet, dass man im wässrigen Medium Lithiumhydroxid, -oxid und/oder dessen in Hydroxid umwandelbare Verbindungen, Metall-(II)-hydroxide, -oxide und/oder deren in Hydroxide umwandelbare Verbindungen der genannten Metalle und Aluminiumhydroxide und/oder deren in Hydroxide umwandelbare Verbindungen sowie Säuren und/oder deren Salze bzw. Gemische davon bei einem pH-Wert von 8 bis 10 und bei Temperaturen von 20 bis 250°C miteinander umsetzt und das erhaltene feste Reaktionsprodukt abtrennt.

Die Reaktionszeit beträgt vorzugsweise 0,5 bis 40 Stunden, insbesondere 3 bis 15 Stunden. Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit wasser und Trocknen des gewaschenen Rückstands bei Temperaturen von beispielsweise 60 bis 150°C, vorzugsweise bei 90 bis 120°C.

Für die Umsetzung mit Aluminium kann sowohl feinteiliges, aktives Metall-(III)-hydroxid in Kombination mit Natriumhydroxid, als auch ein $NaAlO_2$ eingesetzt werden. Lithium bzw. eine der genannten Metall-(II)-verbindungen kann in Form von feinteiligem Lithiumoxid oder-hydroxid oder Mischungen daraus bzw. von feinteiligem Metall-(II)-oxid oder-hydroxid oder Mischungen daraus verwendet werden. Die entsprechenden Säureanionen können in unterschiedlich konzentrierter Form z.B. direkt als Säure oder aber als Salz eingesetzt werden.

Die Umsetzungstemperaturen liegen vorzugsweise zwischen etwa 20 und 250°C, weiter im besonderen zwischen etwa 60 und 180°C. Katalysatoren oder Beschleuniger sind nicht erforderlich. Bei den Substanzen kann als Kristallwasser ganz oder teilweise durch Behandlung entfernt werden. Bei ihrer Anwendung als Stabilisatoren spalten die getrockneten Schichtgitterverbindungen bei den für PVC üblichen Verarbeitungstemperaturen von 160 bis 220°C kein Wasser oder ein anderes Gas ab, so dass in den Formteilen keine störende Blasenbildung auftritt.

Das Anionen $A^n$ in der obigen allgeminen Formel kann Sulfat, Sulfit, Sulfid, Thiosulfat, Peroxosulfat, Peroxodisulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, Monocarbonsäureanionen wie Acetat und Benzoat, Amid, Azid, Hydroxid, Hydroxylamin, Hydroazid, Acetylacetonat, Phenolat, Pseudohalogenide, Halogenite,

Halogenate, Perhalogenate, $I_3^-$, Permanganat, Dianionen von Dicarbonsäuren wie Phthalat, Oxalat, Maleat oder Fumarat, Bisphenolate, Phosphat, Pyrophosphat, Phosphit, Pyrophosphit Trianionen von Tricarbonsäuren wie Citrat, Trisphenolate u.v.m., sowie Gemische daraus sein. Unter diesen sind Hydroxid, Carbonat, Phosphit und Maleat bevorzugt. Zur Verbesserung der Dispergierbarkeit der Substanzen in halogenhaltigen thermoplastischen Polymermassen können diesselben mit einer höheren Fettsäure, z.B. Stearinsäure, einem anionischen oberflächenaktiven Agens, einem Silankuppler, einem Titanat-Kuppler oder einem Glycerinfettsäureester oberflächenbehandelt sein.

***Calcium-Aluminium-Hydroxo-Hydrogenphosphite***

Für die erfindungsgemässen Stabilisatorkombinationen geeignete Verbindungen aus der Gruppe der basischen Calcium-Aluminium-Hydroxy-Hydrogenphosphite der allgemeinen Formel

$$Ca_xAl_2(OH)_{2(x+2)}HPO_3{*}H_2O,$$

wobei x = 2 - 8 und

$$Ca_xAl_2(OH)_{2(x+3-y)}(HPO_3)_y{*}mH_2O,$$

wobei x = 2 - 12,

$$\frac{2x+5}{2} > y > 0$$

und m = 0 - 12 bedeuten, ausgenommen y = 1, wenn x = 2 - 8 ist,
können beispielweise mittels einem Verfahren hergestellt werden, bei dem man Mischungen aus Calciumhydroxid und/oder Calciumoxid, Aluminiumhydroxid und Natriumoxid oder aus Calciumhydroxid und/oder Calciumoxid und Natriumaluminat mit phosphoriger Säure in zur Herstellung der erwünschten Calcium-Aluminium-Hydroxy-Hydrogenphosphite entsprechenden Mengen in wässrigen Medium umsetzt und das Reaktionsprodukt in an sich bekannter Weise abtrennt und gewinnt. Das aus der oben beschriebenen Umsetzung direkt anfallende Reaktionsprodukt kann nach bekannten Verfahren vom wässrigen Reaktionsmedium abgetrennt werden, vorzugsweise, beispielsweise durch Waschen des Filterkuchens mit Wasser und Trockenen des gewaschenen Rückstands bei temperaturen von beispielsweise 60 - 130°C, vorzugsweise 90 - 120 °C.

Für die Umsetzung kann sowohl feinteiliges, aktives Aluminiumhydroxid in Kombination mit Natriumhydroxid als auch ein Natriumaluminat eingesetzt werden. Calcium kann in Form von feinteiligem Calciumoxid oder Calciumhydroxid oder Mischungen daraus verwendet werden. Die phosphorige Säure kann in unterschiedlicher konzentrierter Form eingesetzt werden. Die Umsetzungstemperaturen liegen vorzugsweise zwischen 50 und 100°C, weiter vorzugsweise zwischen etwa 60 und 85°C. Katalysatoren oder Beschleuniger sind nicht erforderlich, stören aber auch nicht. bei den Verbindungen kann das Kristallwasser ganz oder teilweise durch thermische Behandlung entfernt werden.

Bei ihrer Anwendung als Stabilisatoren spalten die getrockneten Calcium-Aluminium-Hydroxy-Phosphite bei den beispielsweise für Hart-PVC üblichen Verarbeitungstemperaturen von 160 - 200°C kein Wasser ab, so dass in den Formteilen keine störende Blasenbildung auftritt.

Zur Verbesserung ihrer Dispergierbarkeit in halogenhaltigen thermoplastischen Harzen können die Verbindungen in bekannter Weise mit oberflächenaktiven Mittel gecoated werden. Die Verbindungsklasse, auch CHAP- oder CAP-Verbindungen genannt, ist beschrieben in EP 0.506.831A1

Die oben beschriebenen Calcium-Aluminium-Hydroxo-Hydrogenphosphite und titanhaltige Hydrotalcite können ausser kristallin auch teilkristallin und/oder amorph vorliegen.

*Dawsonite (Alkalialumocarbonate)*

Diese werden durch die allgemeine Formel

$$M[Al(OH)_2CO_3](M = Na, K)$$

beschrieben. Die Herstellung von Na-Dawsonit (DASC bzw. SAC) und K-Dawsonite (DAPC bzw. PAC) ist publiziert in PS - US 3.501.264 und US 4.221.771 sowie in PS - EP 0394.670 A1. Die Synthese kann hydrothermal oder nichthydrothermal erfolgen. Die Produkte können kristallin oder amorph vorliegen. Einbezogen in die Substanzklasse sind auch Natrium-Magnesium-Alumocarbonate (SMAC); deren Herstellung ist beschrieben PS-US 455.055.284.

Calcium-Aluminium-Hydroxo-Hydrogenphosphite und/oder Zeolithe und/oder Dawsonite und/oder Schichtgitterverbindungen können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymer, angewandt werden.

*Catena-μ-2,2',2"-nitrilotrisethanol-perchlorato(triflato)-Natrium oder -Lithium*

Diese vier Innerkomplexe sind Koordinationspolymere mit folgender Monomereinheit:

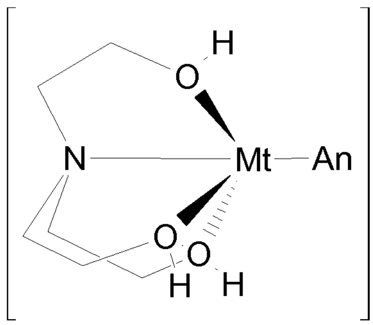

wobei

Mt = Li oder Na
An = $OClO_3$ oder $OS(O_2)CF_3$

Bevorzugt ist An = $OClO_3$, wobei Mt = Na (TEAP) besonders bevorzugt ist. Ihre Verwendung als Stabilisatoren ist beschrieben in WO 2006/136191. Ganz besonders bevorzugt ist eine Phlegmatisierung von konzentrierten wäßrigen TEAP- Lösungen auf PVC Dieser Herstellprozess ist in der deutschen Patentanmeldung mit der Anmeldenummer DE 10 2007 050 428.6 beschrieben.

*Natrium (Lithium)-perchlorat(triflat) in gelöster oder geträgerter Form*

Diese Lithium- oder Natriumsalze können als Lösungen zum Einsatz kommen, wobei folgende Lösungsmittel bevorzugt sind: Wasser, Glycole, Glycolether, (Poly)Glycerine und Polyglycolether.

Besonders bevorzugt sind jedoch geträgerte Formulierungen der Salze, wobei das Salz in gelöster Form (meist wäßrig) auf einem festen Träger in homogener Verteilung ab(ad)sorbiert wird. Als Trägersubstanzen sind zu nennen: Silicimdioxid (Kieselgur), Calciumsilikat, Calciumsilikat, Calciucarbonat, Calciumoxid, Calciumhydroxid, Na-Zeolith A, Hydrotalcit und calcinierter Dolomit, wobei letzerer bevorzugt ist.

Diese Natrium- oder Lithiumverbindungen zeigen in PVC, bevorzugt in zinkfreien Rezepturen, einen Booster-Effekt. Sie werden vorzugsweise im Substrat zweckmäßig von 0,001 bis 5 phr, bevorzugt von 0,01 bis 3 phr und ganz besonders bevorzugt von 0,01 bis 2 phr eingesetzt.

Die Verbindungen dieser Kategorie werden bevorzugt mit Systemen kombiniert, die frei an Zinkkarboxylaten sind, aber **(B1)** oder/und **(B2)** enthalten.

***Metallseifen***

Calciumseifen sind in der Hauptsache Calciumcarboxylate, bevorzugt von längerkettigen Carbonsäuren. Geläufige Beispiele sind Stearate und Laurate, auch Oleate und Salze kürzerkettiger aliphatischer oder aromatischer Carbonsäuren wie Essigsäure, Propionsäure, Buttersäure, Valeriansäure, Hexansäure, Sorbinsäure; Oxalsäure, Malonsäure, Bernsteinsäure, Glutarsäure, Adipinsäure, Fumarsäure, Citronensäure, Benzoesäure, Salicylsäure, Phthalsäuren, Hemimellitsäure, Trimellitsäure, Pyromellitsäure, sowie ferner sogenannte überbasische (overbased) Calciumcarboxylate.

Bevorzugt sind Calciumlaurat, Calciumstearat, Calciumbehenat, Calciumversatat und Calciumabietat.

*Zinkseifen*

Bei den Zinkseifen handelt es sich vornehmlich um Zinkcarboxylate. Dies sind Verbindungen aus der Reihe der aliphatischen gesättigten und ungesättigten $C_{1-22}$-Carboxylate, der aliphatischen gesättigten oder ungesättigten $C_2$-

$_{22}$-Carboxylate, die mit wenigstens einer OH-Gruppe substituiert sind oder deren Kette wenigstens durch ein oder mehrere O-Atome unterbrochen ist (Oxasäuren), der cyclischen und bicyclischen Carboxylate mit 5-22 C-Atomen, der unsubstituierten, mit wenigstens einer OH-Gruppe substituierten und/oder $C_{1-16}$-alkylsubstituierten Phenylcarboxylate, der Phenyl-$C_{1-16}$-alkylcarboxylate, oder der gegebenenfalls mit $C_{1-12}$-alkylsubstituierten Phenolate, oder der Abietinsäure. Zn-S-Verbindungen sind beispielsweise Zn-Merkaptide, Zn-Mercaptocarboxylate und Zn-Mercaptocarbonsäureester.

Namentlich zu erwähnen sind, als Beispiele, die Zinksalze der monovalenten Carbonsäuren, wie Ameisensäure, Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristinsäure, Palmitinsäure, Laurinsäure, Isostearinsäure, Stearinsäure, 12-Hydroxystearinsäure, 9,10-Dihydroxystearinsäure, Ölsäure, Rizinolsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure, Zimtsäure, Mandelsäure, Glykolsäure; Zinksalze der divalenten Carbonsäuren bzw. deren Monoester, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Milchsäure, Malonsäure, Maleinsäure, Weinsäure, Äpfelsäure, Salicylsäure, Polyglykol-dicarbonsäure (n=10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie ferner sog. überbasische (overbased) Zinkcarboxylate oder Zinklaurylmerkaptid, Zinkthioglykolat, Zinkthiosalicylat, Zink-bis-i-octylthioglykolat, Zinkmercaptopropionat, Zinkthiolactat, Zinkthiomalat, Zink-bis-octylmercaptopropionat, Zink-bis-isooctylthiolaktat und Zink-bislaurylthiomalat.

Ausserdem können auch anorganische Zinkverbindungen wie Zinkoxid, Zinkhydroxid, Zinkcarbonat oder basisches Zinkcarbonat zum Einsatz kommen.

Bevorzugt sind neutrale oder basische Zinkcarboxylate einer Carbonsäure mit 1 bis 22 C-Atomen (Zinkseifen), wie beispielsweise Benzoate oder Alkanoate, bevorzugt $C_8$-Alkanoate, Stearat, Oleat, Laurat, Palmitat, Behenat, Versatat, Hydroxystearate und -oleate, Dihydroxystearate, p-tert-Butylbenzoat, oder (Iso)octanoat. Besonders bevorzugt sind Stearat, Laurat, Oleat, Versatat, Behenat, Benzoat, p-tert-Butylbenzoat, 2-Ethylhexanoat und Abietat.

Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden.

*Polyole und Zuckeralkohole*

Als Verbindungen dieses Typs kommen beispielsweise in Betracht: Pentaerythrit, Dipentaerythrit, Tripentaerythrit, Trimethylolethan, Bistrimethylolpropan, Inosit, Polyvinylalkohol, Bistrimethylolethan, Trimethylolpropan, Sorbit, Maltit, Isomaltit, Lycasin, Mannit, Lactose, Leucrose, Disaccharidalkohole wie Laktit, Maltit und Palatinit. Tetramethylcyclohexanol, Tetramethylolcyclopentanol, Tetramethylolpyranol, Glycerin, Diglycerin, Polyglycerin, Thiodiglycerin oder 1-O-$\propto$-D-Glycopyranosyl-D-mannit-dihydrat. Bevorzugt sind Disaccharidalkohole. Verwendung finden auch Polyolsirupe wie Sorbit-, Mannit- und Maltitsirup.

*Dihydropyridin-Derivate (DHP)*

Diese werden duch folgende allgemeine Formel beschrieben:

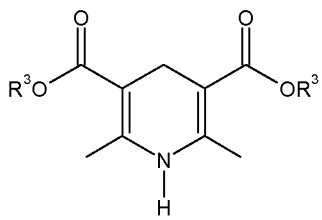

oder Poly-1,4-Dihydropyridin*

*= Die Struktur der subst. Poly-1,4-Dihydropyridine wird beschrieben in WO2006/0136191.

worin

$R^3$ = $C_1$-$C_{20}$-Alkyl, $C_3$-$C_6$-Alkenyl, $C_7$-$C_9$-Phenylalkyl, unsubstituiertes oder mit 1 bis 3 $C_1$-$C_4$-Alkyl-, $C_1$-$C_4$-Alkoxy- oder Hydroxygruppen substituiertes Phenyl ist.

Die Polyole und Dihydropyridine können in einer Menge von beispielsweise 0,01 bis 20, zweckmäßig von 0,1

bis 20 und insbesondere von 0,1 bis 10 Gew.-Teilen, bezogen auf 100 Gew.-Teile PVC, angewandt werden.

*Lineare oder cyclische β-Diketone und β-Ketoester sowie deren Metallsalze*

Verwendbare 1,3-Dicarbonylverbindungen sind lineare oder cyclische Dicarbonylverbindungen sein. Bevorzugt werden Dicarbonylverbindungen der Formel $R'_1CO\ CHR_2-COR'_3$ verwandt, worin $R'_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-Cycloalkyl, durch $C_1$-$C_4$-alkylsubstituiertes $C_5$-$C_{12}$-Cycloalkyl oder eine Gruppe $-R'_5-S-R'_6$ oder $-R'_5-O-R'_6$ bedeutet; $R'_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Gruppe $-CO-R'_4$ bedeutet; $R'_3$ eine der für $R'_1$ gegebenen Bedeutungen hat oder $C_1$-$C_{18}$-Alkoxy bedeutet, $R'_4$ $C_1$-$C_4$-Alkyl oder Phenyl bedeutet; $R'_5$ $C_1$-$C_{10}$-Alkylen bedeutet und $R'_6$ $C_1$-$C_{12}$-Alkyl, Phenyl, $C_7$-$C_{18}$-Alkylphenyl oder $C_7$-$C_{10}$-Phenylalkyl bedeutet.

Hierzu gehören die Hydroxylgruppen enthaltenden Diketone PS - EP 0.346.279 A1 und die Oxa- und Thiadiketone in PS - EP 0.307.358 A1 ebenso wie die auf Isocyanursäure basierenden Ketoester in PS - US 4,339,383 (THEIC-Ester).

$R'_1$ und $R'_3$ als Alkyl können insbesondere $C_1$-$C_{18}$-Alkyl sein, z. B. Methyl, Ethyl, n-Propyl, Isopropyl, n-Butyl, tert Butyl, Pentyl, Hexyl, Heptyl, Octyl, Decyl, Dodecyl oder Octadecyl. $R'_1$ und $R'_3$ als Hydroxyalkyl stellen insbesondere eine Gruppe $-(CH_2)_n-OH$ dar, worin n 5, 6 oder 7 ist.

$R'_1$ und $R'_2$ als Alkenyl können beispielsweise Vinyl, Allyl, Methallyl, 1-Butenyl, 1-Hexenyl oder Oleyl bedeuten, vorzugsweise Allyl.

$R'_1$ und $R'_3$ als durch OH, Alkyl, Alkoxy oder Halogen substituiertes Phenyl können beispielsweise Tolyl, Xylyl, tert Butylphenyl, Methoxyphenyl, Ethoxyphenyl, Hydroxyphenyl, Chlorphenyl oder Dichlorphenyl sein.

$R'_1$ und $R'_3$ als Phenylalkyl sind insbesondere Benzyl. $R'_2$ und $R'_3$ als Cycloalkyl oder Alkylcycloalkyl sind insbesondere Cyclohexyl oder Methylcyclohexyl.

$R'_2$ als Alkyl kann insbesondere $C_1$-$C_4$-Alkyl sein. $R'_2$ als $C_2$-$C_{12}$-Alkenyl kann insbesondere Allyl sein. R'2 als Alkylphenyl kann insbesondere Tolyl sein. $R'_2$ als Phenylalkyl kann insbesondere Benzyl sein. Vorzugsweise ist $R'_2$ Wasserstoff. $R'_3$ als Alkoxy kann z.B. Methoxy, Ethoxy, Butoxy, Hexyloxy, Octyloxy, Dodecyloxy, Tridecyloxy, Tetradecyloxy oder Octadecyloxy sein. $R'_5$ als $C_1$-$C_{10}$-Alkylen ist insbesondere $C_2$-$C_4$-Alkylen. $R'_6$ als Alkyl ist insbesondere $C_4$-$C_{12}$-Alkyl, z. B. Butyl, Hexyl, Octyl, Decyl oder Dodecyl.

$R'_6$ als Alkylphenyl ist insbesondere Tolyl. $R'_6$ als Phenylalkyl ist insbesondere Benzyl.

Beispiele für 1,3-Dicarbonylverbindungen der vorstehenden allgemeinen Formel sowie deren Alkali-, Erdalkali- und Zinkchelate sind Acetylaceton, Butanoylaceton, Heptanoylaceton, Stearoylaceton, Palmitoylaceton, Lauroylaceton, 7-tert.-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, 1-Benzoyl-1-acetylnonan, Benzoyl-acetylphenylmethan, Stearoyl-4-methoxybenzoylmethan, Bis(4-tert-butylbenzoyl)methan, Benzoylformylmethan, Benzoyl-phenylacetylmethan, Biscyclohexanoyl-methan, Di-pivaloyl-methan, 2-Acetyl-cyclo-pentanon, 2-Benzoylcyclopentanon, Diacetessigsäuremethyl-, -ethyl- und -allylester, Benzoyl-, Propionyl- und Butyrylacetessigsäuremethyl- und -ethylester, Triacetylmethan, Acetessigsäuremethyl-, -ethyl-, - hexyl-, -octyl-, -dodecyl- oder -octadecylester, Benzoyl-essigsäuremethyl-, -ethyl-, -butyl-, - 2-ethylhexyl-, -dodecyl- oder -octadecylester, sowie Propionyl- und Butyrylessigsäure-$C_1$-$C_{18}$-alkylester. Stearoylessigsäureethyl-, -propyl-, -butyl-, -hexyl- oder -octylester sowie mehrkernige β-Ketoester wie in PS - EP-A 0 433 230 beschrieben und Dehydracetsäure sowie deren Zink-, Magnesium- oder Erdalkalisalze. Bevorzugt sind Ca-, Mg- und Zn-Salze des Acetylacetons und der Dehydracetsäure.

Besonders bevorzugt sind 1,3-Diketoverbindungen der obigen Formel, worin $R'_1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, $R'_2$ Wasserstoff ist und $R'_3$ eine der für $R'_1$ gegebenen Bedeutungen hat. Ebenso gehören hierzu heterocyclische 2,4-Dione wie N-Phenyl-3-acetylpyrrolidin-2,4-dion. Weitere Vertreter diese Kategorie sind beschrieben in PS - EP 0.734.414 A1. Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewandt werden.

*Phosphorigsäureester (Phosphite)*

Beispiele hierfür sind Trioktyl-, Tridezyl-, Tridodezyl-, Tritridezyl-, Tripentadezyl-, Trioleyl, Tristearyl-, Triphenyl-, Trilauryl-, Trikresyl-, Tris-nonylphenyl-, Tris-2,4-t-butyl-phenyl- oder Trizyklohexylphosphit. Weitere geeignete Phosphite sind verschieden gemischte Aryldialkyl- bzw. Alkyl-diarylphosphite wie Phenyldioktyl-, Phenyldidezyl-, Phenyldidodezyl-, Phenylditridezyl-, Phenylditetradezyl-, Phenyldipentadezyl-, Oktyldiphenyl-, Dezyldi-phenyl-, Undezyldiphenyl-, Dodezyldiphenyl-, Tridezyldiphenyl-, Tetradezyldiphenyl-, Pentadezyldiphenyl-, Oleyldiphenyl-, Stearyldiphenyl- und Dodezyl-bis-2,4-di-t-butyl-phenylphosphit. Weiterhin können auch Phosphite verschiedener Di- bzw. Polyole vorteilhaft verwandt werden, z.B. Tetraphenyldipropylenglykoldiphosphit, Poly(dipropylenglykol)phenylphosphit, Tetra-isodezyl-dipropylenglykoldiphosphit, Tris-dipropylenglykolphosphit, Tetramethylolzyklohexanol-dezyldiphosphit, Tetramethylolzyklohexanolbutoxyethoxy-ethyldiphosphit, Tetramethylolzyklohexanol-nonylphenyl-diphosphit, Bis-nonylphenyl-di-trimethylolpropandiphosphit, Bis-2-butoxyethyl-di-trimethylolpropandiphosphit, Trishydroxyethylisocyanurat-hexadezyltriphosphit, Didezylpentaerythritdiphosphit, Distearylpentaerythritdiphosphit, Bis-2,4-di-t-butylphenylpentaerythritdiphosphit, sowie Gemische dieser Phosphite und Aryl/alkylphosphit-Gemische der statistischen Zusammen-setzung $(H_{19}C_9\text{-}C_6H_4)O_{1,5}P(OC_{12,13}H_{25,27})_{1,5}$ oder $(C_8H_{17}\text{-}C_6H_4\text{-}O\text{-})_2P(i\text{-}C_8H_{17}O)$,$(H_{19}C_9\text{-}C_6H_4)O_{1,5}P(OC_{9,11}H_{19,23})_{1,5}$. Technische Beispiele sind Naugard P, Mark CH300, Mark CH301, Mark CH302 und Mark CH55 (Hersteller Chemtura Corp. USA). Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewendet werden.

Ein erfindungsgemäßes Stabilisatorsystem kann die beschriebenen Phosphitverbindungen in einer Menge von bis zu etwa 30 Gew.-%, insbesondere bis etwa 10 Gew.-%, enthalten.

*Sterisch gehinderte Amine (HALS)*

Bei den sterisch gehinderten Aminen handelt es sich allgemein um Verbindungen enthaltend die Gruppe

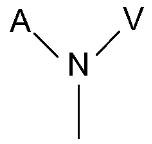

worin A und V unabhängig voneinander $C_{1}$-$_{8}$-Alkyl-, $C_{3}$-$_{8}$Alkenyl-, $C_{5}$-$_{8}$-Zykloalkyl-, oder $C_{7}$-$_{9}$ -Phenylalkyl- sind, oder zusammen gegebenenfalls durch O, NH oder $CH_3$-N unterbrochenes $C_{2}$-$_{5}$ -Alkylen bilden, oder um ein zyklisches sterisch gehindertes Amin, insbesondere eine Verbindung aus der Reihe der Alkyl- bzw. Polyalkylpiperidine, vor allem der Tetramethylpiperidine enthaltend die Gruppe

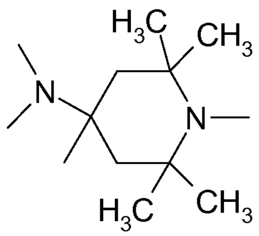

Beispiele für solche Polyalkylpiperidinverbindungen sind folgende (bei den oligomeren oder polymeren Verbindungen liegen n und r im Bereich 2-200, vorzugsweise im Bereich 2-10, insbesondere 3-7). Eine umfangreiche Liste solcher Verbindungen befindet sich in EP 0 796 888 B1.

Der Gehalt eines erfindungsgemäßen Stabilisatorsystems an ster. gehinderten Aminen, beträgt beispielsweise etwa 0,01 bis etwa 10 Gew.-%.

*Glycidylverbindungen*

Beispiele für Glycidylverbindungen sind Verbindungen mit der Glycidylgruppe:

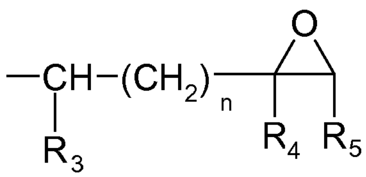

wobei diese direkt an Kohlenstoff, Sauerstoff-, Stickstoff- oder Schwefelatome gebunden ist, und worin entweder $R_3$ und $R_5$ beide Wasserstoff sind, $R_4$ Wasserstoff oder Methyl und n = 0 ist, oder worin $R_3$ und $R_5$ zusammen $-CH_2\text{-}CH_2\text{-}$ oder $-CH_2\text{-}CH_2\text{-}CH_2\text{-}$ bedeuten, $R_4$ dann Wasserstoff und n = 0 oder 1 ist.

I) Glycidyl- und β-Methylglycidylester erhältlich durch Umsetzung einer Verbindung mit mindestens einer Karboxylgruppe im Molekül und Epichlorhydrin bzw. Glyzerindichlorhydrin bzw. β-Methyl-epichlorhydrin. Die Umsetzung erfolgt zweckmäßig in Gegenwart von Basen.

Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Kapron-, Kapryl-, Pelargonsäure, Laurin-, Myristin-, Palmitin- und Stearinsäure.

Es können aber auch zykloaliphatische Karbonsäuren eingesetzt werden, wie beispielsweise Zyklohexankarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Ebenfalls können auch carboxylterminierte Addukte, z. B. von Trimellithsäure und Polyolen, wie beispielsweise Glyzerin oder 2,2-Bis-(4-hydroxyzyklohexyl)-propan verwendet werden. Weitere im Rahmen dieser Erfindung verwendbare Epoxidverbindungen finden sich in EP 0 506617.

II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.

Ether dieses Typs leiten sich beispielsweise ab von azyklischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glyzerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooktanol, 2-Ethylhexanol, Isodekanol sowie $C_7$-$C_9$-Alkanol- und $C_9$-$C_{11}$-Alkanolgemischen.

Sie leiten sich aber auch beispielsweise ab von zykloaliphatischen Alkoholen wie 1,3- oder 1,4-Dihydroxyzyklohexan, Bis-(4-hydroxyzyklohexyl)-methan, 2,2-Bis-(4-hydroxyzyklo-hexyl)-propan oder 1,1-Bis-(hydroxymethyl)-zyklohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N"-Tri- und N,N',N",N"'-Tetraglycidylderivate von Zykloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-merkaptomethylphenyl)-ether ableiten.

V) Epoxidverbindungen mit einem Rest der obigen Formel, worin R1 und R3 zusammen - CH2-CH2- bedeuten und n 0 ist, sind Bis-(2,3-epoxyzyklopentyl)-ether, 2,3-Epoxyzyklopentylglycidylether oder 1,2-Bis-(2,3-epoxyzyklopentyloxy)-ethan. Ein Epoxidharz mit einem Rest der obigen Formel, worin R1 und R3 zusammen -CH2-CH2- sind und n 1 bedeutet, ist beispielsweise 3,4-Epoxy-6-methyl-zyklohexankarbonsäure-(3',4'-epoxy-6'-methyl-zyklohexyl)-methylester.

Geeignete endständige Epoxide sind beispielsweise:

a) flüssige Bisphenol-A-diglycidylether wie Araldit®GY 240, Araldit®GY 250, Araldit®GY 260, Araldit®GY 266, Araldit®GY 2600, Araldit®MY 790 und Epicote® 828 (BADGE);
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610 und Epikote® 1002;
c) flüssige Bisphenol-F-diglycidylether wie Araldit®GY 281, Araldit®PY 302, Araldit®PY 306 (BFDGE);
d) feste Polyglycidylether von Tetraphenylethan wie CG Epoxy Resin®0163;
e) feste und flüssige Polyglycidylether von Phenolformaldehyd Novolak wie EPN 1138, EPN 1139, GY 1180, PY 307 (NODGE);
f) feste und flüssige Polyglycidylether von o-Kresolformaldehyd Novolak wie ECN 1235, ECN 1273, ECN 1280, ECN 1299 (NODGE);
g) flüssige Glycidylether von Alkoholen wie Shell Glycidylether® 162, Araldit®DY 0390, Araldit®DY 0391;
h) flüssige und feste Glycidylester von Karbonsäuren wie Shell Cardura® E Terephthalsäureester, Trimellithsäureester sowie deren Mischungen Araldit®PY 284 und Araldit® P811;
i) feste heterozyklische Epoxidharze (Triglycidylisocyanurat) wie Araldit® PT 810;
j) flüssige zykloaliphatische Epoxidharze wie Araldit®CY 179;
k) flüssige N,N,O-Triglycidylether von p-Aminophenol wie Araldit®MY 0510;
l) Tetraglycidyl-4-4'-methylenbenzamin oder N,N,N',N'-Tetraglycidyldiamino-phenylmethan wie Araldit®MY 720, Araldit®MY 721.

Vorwiegend werden Diglycidylverbindungen auf Ether- oder Esterbasis bevorzugt. Ganz besonders bevorzugt sind feste Glycidylester der Terephthal- und Trimellitsäure.

Gegebenenfalls kann auch ein Gemisch verschiedener Epoxidverbindungen eingesetzt werden.

*Epoxidierte Fettsäureneester*

Beispiele für diese Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, und epoxidiertes Baumwollsamenöl, epoxidiertes Rüböl, epoxidiertes Palmöl, epoxidiertes Kokosöl sowie epoxidiertes Butyl- und Octyloleat oder epoxidierte Linolester bzw. Linolenester.

Der Konzentrationsbereich für Epoxyverbindungen liegt bevorzugt bei 0,5 bis 5,0 phr.

*Antioxidantien*

Dazu zählen sterisch gehinderte Phenole, wie alkylierte Monophenole, z. B. 2,6-Di-tert-butyl-4-methylphenol, Alkylthiomethylphenole, z.B. 2,4-Di-oktylthiomethyl-6-tert-butylphenol, alkylierte Hydrochinone , z. B. 2 , 6-Di-tert-butyl-4-methoxyphenol, hydroxylierte Thiodiphenylether, z. B. 2,2'-Thio-bis-(6-tert-butyl-4-methylphenol), Alkyliden-Bisphenole, z.B. 2,2'-Methylen-bis-(6-tert-butyl-4-methylphenol), Benzylverbindungen, z.B. 3,5,3',5'-Tetra-tert-butyl-4,4'-di-hydroxydibenzylether, hydroxybenzylierte Malonate, z.B. Dioktadezyl-2,2-bis-(3,5-di-tert-butyl-2-hydroxybenzyl)-malonat, Hydroxybenzyl-Aromaten, z.B. 1,3,5-Tris-(3,5-di-tert-butyl-4-hydroxybenzyl)-2,4,6-trimethylbenzol, Triazinverbindungen, z.B. 2,4-Bis-oktyl-merkapto-6-(3,5-di-tert-butyl-4-hydroxyanilino)1,3,5-triazin, Phosphonate und Phosphonite, z.B. Dimethyl-2,5-di-tert-butyl-4-hydroxy-benzylphosphonat, Acylaminophenole, z.B. 4-Hydroxylaurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dizyklohexyl-4-hydroxyphenyl)-propionsäure, Ester der 3,5-Di-tert-butyl-4-hydroxy-phenylessigsäure mit ein- oder mehrwertigen Alkoholen, Amide der β-(3,5-di-tert-butyl-4-hydroxyphenyl)-propionsäure, z.B. N,N'-Bis-(3,5-di-tert-butyl-4-hydroxyphenylpropionyl)-hexamethylendiamin, Vitamin E (Tocopherol) und Abkömmlinge sowie D,L-Ascorbinsäure. Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewendet werden.

*UV-Absorber und Lichtschutzmittel*

Beispiele dafür sind 2-(2'-Hydroxyphenyl)-benztriazole, z.B. 2-(2'-Hydroxy-5'-methylphenyl)-benztriazol, 2-Hydroxybenzophenone, Ester von gegebenenfalls substituierten Benzoesäuren, z.B. 4-tert-Butyl-phenylsalizylat, Phenylsalizylat, Acrylate, Nickelverbindungen, Oxalsäurediamide, z.B. 4,4'-Di-oktyloxy-oxanilid, 2,2'-Di-oktyloxy-5,5'-di-tert-butyl-oxanilid, 2-(2-Hydroxyphenyl)-1,3,5-triazine, z.B. 2,4,6-Tris(2-hydroxy-4-oktyloxyphenyl)-1,3,5-triazin, 2-(2-Hydroxy-4-oktyloxyphenyl)-4,6-bis-(2,4-dimethylphenyl)-1,3,5-triazin, sterisch gehinderte Amine auf Basis von Tetramethylpiperidin bzw. Tetramethylpiperazinon oder Tetramethylmorpholinon, z.B. Bis(2,2,6,6-tetramethylpiperidin-4-yl)-sebazat, Bis(2,2,6,6-tetramethyl-piperidin-4-yl)-succinat sowie Benzoxazinone wie 1,4-Bis-benzoxazinonyl-benzol.

*Optische Aufheller*

Beispiele hierfür sind Bis-benzol(1,4)-oxazole, Phenylkumarine und Bis-styryl-biphenyle wie 4-Methyl-7-diethylaminokumarin, 3-Phenyl-7-(4-methyl-6-butoxybenzoxazol)-kumarin, 4,4'-Bis-(benzoxazol-2-yl)-stilben und 1,4-Bis(-benzoxazol-2-yl)-naphthalin. Bevorzugt sind Lösungen optischer Aufheller in einem Weichmacher, beispielsweise DOP.

*Antistatika*

Antistatika werden eingeteilt in nichtionische (a), anionische (b), kationische (c) und amphotere (d) Klassen. Zu (a) gehören Fettsäureethoxylate, Fettsäureester, ethoxylierte Fettalkylamine, Fettsäurediethanolamide und ethoxylierte Phenole und Alkohole sowie Polyglykolmonofettsäureester. Zu (b) gehören Alkalifettalkansulfonate und Phosphorsäurebis-fettalkoholester-alkalisalze. Zu (c) gehören quaternäre Fettalkylammoniumsalze und zu (d) gehören Fettalkylbetaine und Fettalkyl-imidazolinbetaine. Einzelne bevorzugte Verbindungen sind Laurinsäurediethanolamid, Myristyldiethanolamin, Na-oktadezyl-sulfonat und Na-bis-oktadezylphosphat.

*Pigmente*

Ebenfalls als Bestandteil des erfindungsgemäßen Stabilisatorsystems geeignet sind Pigmente. Geeignete Stoffe sind dem Fachmann bekannt. Beispiele für anorganische Pigmente sind $TiO_2$, Pigmente auf Zirkonoxidbasis, $BaSO_4$, Zinkoxid (Zinkweiss) und Lithopone (Zinksulfid/Bariumsulfat), Ruß, Ruß-Titandioxid-Mischungen, Eisenoxidpigmente, $Sb_2O_3$, $(Ti,Ba,Sb)O_2$, $Cr_2O_3$, Spinelle wie Kobaltblau und Kobaltgrün, Cd(S,Se), Ultramarinblau. Organische Pigmente sind z.B. Azopigmente, Phthalozyaninpigmente, Chinacridonpigmente, Perylenpigmente, Diketo-pyrrolopyrrolpigmente und Anthrachinon-pigmente. Bevorzugt ist $TiO_2$ auch in mikronisierter Form. Eine Definition und weitere Beschreibungen finden sich im "Handbook of PVC Formulating", E. J.Wickson, John Wiley & Sons, New York, 1993.

*Biozide*

Als Biozide sind zu benennen: Isothiazolin-3-on-Derivate, wie, 2-n-Octyl-4-isothiazolin-3-on (OIT) und 4,5-Dichloro-2-n-octyl-4-isothiazolin-3-on (DCOIT), Ag-Zn-Zeolith, N-Trichloromethylthio-4-cyclohexen-1,2-dicarboximid, 2,3,5,6-Tetrachloro-4-(methyl sulphonyl)pyridin, 10,10'-Oxybisphenoxarsine (OBPA), quaternäre Ammonium- und Phosphoniumsalze, 3-Iodo-2-propinyl-butylcarbamat(IPBC), Benzimidazol -2-carbaminsäuremethylester, 2,4,4'-Trichloro-2'-hydroxydiphenylether, Zink-bis-2-pyridinthiolat-N-oxid (Zinkpyrithion) und 1,2-Benzisothiazolin-3-on, N-Butylbenzisothiazolin-3-on sowie 2-(4-Thiazolyl)-benzimidazol (Thiabendazol).

*Füllstoffe*

Als Füllstoffe sind zu benennen: Calciumcarbonat, Dolomit, Calciumsulfat, Talk, Kaolin, Glimmer, Feldspat, Nephelin, Syenit, Wollastonit, Bariumsulfat, Schwerspat, Aluminiumhydroxid, Magnesiumhydroxid, Ruß und Graphit.

*Reibmittel*

Treibmittel sind z.B. organische Azo- und Hydrazoverbindungen, Tetrazole, Oxazine, Isatinsäureanhydrid, N-Methylisatinsäureanhydrid, sowie Soda und Natriumbikarbonat. Bevorzugt sind Azodikarbonamid und Natriumbikarbonat sowie deren Mischungen. Ganz besonders bevorzugt ist Isatinsäureanhydrid oder N-Methylisatinsäureanhydrid speziell in Weich-PVC oder PVC-Halbhart.

*Gleitmittel*

Ein erfindungsgemäßes Stabilisatorsystem kann weiterhin Gleitmittel enthalten.
Als Gleitmittel kommen beispielsweise in Betracht: Montanwachse, Fettsäureester, PE- und PP-Wachse, Amidwachse, Chlorparaffine, Glyzerinester oder Erdalkaliseifen, ferner Fettketone sowie Kombinationen davon, wie in PS - EP 0.259.783 A1 aufgeführt.

Ein erfindungsgemäßes Stabilisatorsystem kann die beschriebenen Gleitmittel in einer Menge von bis zu etwa

70 Gew.-%, insbesondere bis etwa 40 Gew.-%, enthalten.

*Weichmacher*

Ebenfalls als Zusatzstoffe für das Stabilisatorsystem gemäß der vorliegenden Erfindung geeignet sind organische Weichmacher. Als organische Weichmacher kommen beispielsweise solche aus den folgenden Gruppen in Betracht:

(i) Phthalsäureester wie bevorzugt Di-2-ethylhexyl-, Di-iso-nonyl- und Di-iso-dezylphthalat, die auch unter den gebräuchlichen Abkürzungen DOP (Dioktylphthalat, Di-2-ethylhexyl-phthalat), DINP (DÜsononylphthalat), DIDP (Diisodezylphthalat) bekannt sind
(ii) Ester aliphatischer Dikarbonsäuren, insbesondere Ester von Adipin-, Azelain- und Sebazinsäure, bevorzugt Di-2-ethylhexyladipat und Di-iso-oktyladipat
(iii) Trimellitsäureester, beispielsweise Tri-2-ethylhexyltrimellitat, Tri-iso-dezyltri-mellitat (Gemisch), Tri-iso-tridezyltrimellitat, Tri-iso-oktyltrimellitat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellitate; gebräuchliche Abkürzungen sind TOTM (Trioktyltrimellitat, Tri-2-ethylhexyl-trimellitat), TIDTM (Triisodezyltrimellitat) und TITDTM (Triisotridezyltrimellitat)
(iv) Epoxyweichmacher; in der Hauptsache sind das epoxidierte ungesättigte Fettsäuren z.B. epoxidiertes Sojabohnenöl
(v) Polymerweichmacher: Die gebräuchlichsten Ausgangsmaterialien für ihre Herstellung sind Dikarbonsäuren wie Adipin-, Phthal-, Azelain- und Sebazinsäure; Diole wie 1,2-Propandiol, 1,3-Butandiol, 1,4-Butandiol, 1,6-Hexandiol, Neopentylglykol und Diethylenglykol, (s. ADMEX®-Typen der Velsicol Corp. und PX-811 der Asahi Denka)
(vi) Phosphorsäureester: Eine Definition dieser Ester ist im weiter vorn genannten "TASCHENBUCH der Kunststoffadditive " Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Resorzin-bis-diphenylphosphat, Triphenylphosphat, Trikresylphosphat und Trixylenylphosphat; bevorzugt sind Tri-2-ethylhexyl-phosphat sowie Reofos® 50 und 95 (Ciba Spezialitätenchemie)
(vii) Chlorierte Kohlenwasserstoffe (Paraffine)
(viii) Kohlenwasserstoffe
(ix) Monoester, z.B. Butyloleat, Phenoxyethyloleat, Tetrahydrofurfuryloleat und Alkylsulfonsäureester
(x) Glykolester, z.B. Diglykolbenzoate
(xi) Zitronensäureester, z.B. Tributylzitrat und Acetyltributylzitrat wie in PS - WO 02/05206 beschrieben
(xii) Perhydrophthal-, -isophthal- und -terephthalester sowie Perhydroglykol- und diglykolbenzoatester; bevorzugt ist Perhydro-diisononylphthalat (Hexamoll® DINCH - Hersteller BASF) wie in PS - DE 197.56.913 A1, DE 199.27.977 A1, DE 199.27.978 A1 und DE 199.27.979 A1 beschrieben.
(xiii) Rizinussöl basierte Weichmacher (Soft-N-Safe®, Hersteller Fa. DANISCO)
(xiv) Terpolymere Keton-Ethylen-Ester Elvaloy® KEE, (Elvaloy® 741, Elvaloy® 742, Hersteller Fa. DuPont)

Eine Definition dieser Weichmacher und Beispiele für solche sind in " TASCHENBUCH der Kunststoffadditive ", R. Gächter/H. Müller, Carl Hanser Verlag, 3. Aufl., 1989, Kapitel 5.9.6, Seiten 412-415, sowie in "PVC Technology ", W.V. Titow, 4th. Ed., Elsevier Publ., 1984, Seiten 165-170 angegeben. Es können auch Mischungen unterschiedlicher Weichmacher verwandt werden. Die Weichmacher können in einer Menge von beispielsweise von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorsysteme etwa 0,1 Gew.-% oder mehr, beispielsweise etwa 0,5 Gew.-%, 1 Gew.-%, 2 Gew.-% oder 5 Gew.-%.

*Flammschutzmittel und Rauchverminderer*

Als Flammschutzmittel kommen insbesondere in Weich-PVC bevorzugt in Betracht: Aluminiumhydroxid, Magnesiumhydroxid und oligomere oder polymere Phosphorsäurephenolester. Ganz besonders bevorzugt sind Flammschutzmittel auf Nanoclay-Basis (organomodified clay; s. Beyer, G. Journal of Fire Sciences, 2007, 25, 65-78). Als Rauchverminderer werden bevorzugt anorganische Substanzen auf Zinkoxid- oder Zinnoxidbasis bzw. als Zink(hydroxo)stannat, Ammoniummolybdat, Zinkmolybdat und Zinkborat oder Magnesium- Zink-Komplexoxide der Formel (Mg,Zn)O eingesetzt (WO 2008/023249).

Ein erfindungsgemäßes Stabilisatorsystem kann die beschriebenen Flammschutzmittel in einer Menge von bis zu etwa 70 Gew.-%, insbesondere bis etwa 50 Gew.-%, enthalten.

Definitionen und Beispiele für weitere Zusätze wie Schlagzähmodifikatoren und Verarbeitungshilfen, Geliermittel, Biozide, Metalldesaktivatoren, Antifogging-Agents sowie Kompatibilisatoren sind beschrieben in "Handbuch der Kunststoffadditive", R. Gächter/H. Müller, Carl Hanser Verlag, 3. Aufl., 1989, sowie 4. Aufl. 2001 und im "Handbook of Polyvinyl Chloride Formulating" E. J. Wickson, J. Wiley & Sons, 1993, sowie in "Plastics Additives" G. Pritchard, Chapman & Hall, London, 1st Ed., 1998. Schlagzähmodifikatoren sind ferner ausführlich beschrieben in "Impact Modifiers for PVC", J. T. Lutz/D. L. Dunkelberger, John Wiley & Sons, 1992.

Ein weiterer Gegenstand der Erfindung sind Zusammensetzungen, die ein halogenhaltiges Polymer und ein erfindungsgemäßes Stabilisatorsystem enthalten.

Bei diesen Zusammensetzungen sind die Komponenten **(A)** + **(B1)**, **(A)** + **(C)** und **(A)** + **(B1)** + (C) zur Erzielung der Stabilisierung im halogenhaltigen Polymer zweckmäßig in folgenden Konzentrationsbereichen einzusetzen:

| | |
|---|---|
| Bevorzugt: | **(A)** 0,01 bis 30 Gew.-Teile |
| | **(B1)** 0,001 bis 10 Gew.-Teile |
| | **(C)** 0,01 bis 10 Gew.-Teile |
| Besonders bevorzugt: | **(A)** 0,05 bis 15 Gew.-Teile |
| | **(B1)** 0,01 bis 5,0 Gew.-Teile |
| | **(C)** 0,01 bis 5,0 Gew.- Teile |
| Ganz besonders bevorzugt: | **(A)** 0,1 bis 10 Gew.-Teile |
| | **(B1)** 0,01 bis 3,0 Gew.-Teile |
| | **(C)** 0,01 bis 3,0 Gew.-Teile |

bezogen auf 100 Gew.-Teile halogenhaltiges Polymer.

Darüber hinaus ist bevorzugt, dass die Verbindungen der Formel **(A)** in einer Einsatzmenge von 0,01 bis 3,0phr, bevorzugt von 0,05 bis 1,5phr und besonders bevorzugt von 0,1 bis 1,0phr vorliegen.

Zusätzlich kann die erfindungsgemäße Zusammensetzung selbstverständlich weitere Verbindungen, welche oben als Bestandteile des erfindungsgemäßen Stabilisatorsystems genannt sind, enthalten.

Ein weiterer Gegenstand der vorliegenden Anmeldung ist daher eine Zusammensetzung, die weiterhin mindestens eine Verbindungen aus den Substanzklassen der Zeolithe, Hydrotalcite, Dawsonite und Calciumcarbonatohydroxodialuminate; Catena-μ-2,2',2"-nitrilotrisethanol-perchlorato (-triflato)-Natrium- oder Lithium-Innerkomplexe bzw. Lithium- oder Natriumperchlorate (-triflate) in gelöster bzw. geträgerter Form; fettsaure Calcium- oder Zinksalze (Calcium- oder Zinkseifen); Polyole und Zuckeralkohole und/oder 1,4-Dihydropyridin-Derivate (DHP); lineare oder cyclische β-Diketone bzw. β-Ketoester und deren Calcium-, Magnesium- oder Zinksalze ; Phosphorigsäureester (Phosphite) und sterisch gehinderte Amine; Glycidylverbindungen und epoxidierte Fettsäurester; Antioxidantien, UV-Absorber und optische Aufheller ; Pigmente und Biozide; Füllstoffe und Treibmittel; Gleitmittel und Weichmacher; Flammschutzmittel und Rauchverminderer; Schlagzähmodifikatoren und Verarbeitungshilfen aufweist.

Beispiele für die zu stabilisierenden halogenhaltigen Polymere sind chlorhaltige Polymere, insbesondere die des Vinylchlorids, was ganz besonders bevorzugt ist, sowie Vinylidenchlorids, Vinylharze enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymere Ester der Acrylsäure und der alpha-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate des Vinylchlorids mit polymerisierbaren Verbindungen wie Acrylnitril, Vinylacetat oder ABS zu verstehen, wobei es sich um Suspensions-, Masse- oder Emulsionspolymerisate handeln kann.

Bevorzugt ist ein PVC-Homopolymer, auch in Kombination mit Polyacrylaten oder Polymethacrylaten.

Ferner kommen auch Pfropfpolymerisate von PVC mit EVA, ABS und MBS in Betracht, ebenso Pfropfpolymerisate von PVC mit PMMA. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate

sind dem Fachmann geläufig und bedeuten folgendes: ABS Acrylnitril-Butadien-Styrol; SAN Styrol-Acrylnitril; NBR Acrylnitril-Butadien; NAR Acrylnitril-Acrylat; EVA Ethylen-Vinylacetat. Es kommen insbesondere auch Styrol-Acrylnitril-Copolymerisate auf Acrylat-Basis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen aus (i) 100 Gewichtsteilen PVC und (ii) 0-300 Gewichtsteilen ABS und/oder mit SAN modifiziertes ABS und 0-80 Gewichtsteilen der Copolymeren NBR, NAR und/oder EVA, insbesondere jedoch EVA.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. Ein weiterer Einsatz der erfindungsgemäßen Stabilisatorkombinationen beruht darin, daß dem Fertigartikel aus Hart- oder Weich-PVC antistatische Eigenschaften verliehen werden können. Auf diese Weise ist es möglich, den Einsatz teurer Antistatika zu reduzieren. Bevorzugt für diese Anwendung ist Weich-PVC oder PVC-Halbhart.

Ein weiterer Gegenstand der Erfindung sind Gegenstände wie Gebrauchsmittel (Gebrauchsgegenstände), die eine erfindungsgemäße Zusammensetzung und das halogenhaltige Polymer enthalten.

Bevorzugt ist auch die Verwendung von Gebrauchsartikeln, die sich durch eine besondere feine Schaumstruktur auszeichnen. Dies gilt für Hart-, Weich- und Halbhart-PVC. Besonderes wichtig ist dieser Aspekt bei Tapeten und Fußböden aus Weich-PVC. Normalerweise sind Schwermetallverbindungen wie Zn- oder Sn-Stabilisatoren als Kicker zur Erzielung eines feinen Schaumes erforderlich. Überraschend wurde gefunden, daß TEAP-Innerkomplexe eine Kickerwirkung auf Isatinsäure- oder N-Methylisatinsäureanhydrid ausüben, was die Erzielung einer Feinschaumstruktur gewährleistet.

Überraschend ist auch, dass die elektrischen Widerstandseigenschaften eines Gebrauchsartikels, der als eine Komponente TEA-Innerkomplexe enthält, drastisch verbessert werden, was sich insbesondere bei der Kabel- und Isolatorenherstellung und bei Anwendungen im Halbleiterbereich als günstig erweist.

Ferner schneiden diese Artikel (hauptsächlich Kabel), sofern sie zinkfrei stabilisiert sind, bei der Wasserlagerung besser ab, da die Formulierungen keine Zinkseifen enthalten und somit bei der Verarbeitung kein Zinkchlorid entsteht, das nach Migration an die Kunststoffoberfläche die elektrischen Werte verschlechtert.

Außerdem können bei zinksensitiven Anwendungen hauptsächlich im Bereich Weich-PVC (z.B. Folien, Dachbahnen), die dringend einer bioziden Ausrüstung bedürfen, zinkhaltige Fungizide zugesetzt werden, was ansonsten durch die Anwendung von Calcium-Zink-Stabilisatoren stark eingeschränkt ist.

Die mitverwendbaren Verbindungen sowie die halogenhaltigen Polymeren sind dem Fachmann allgemein bekannt und werden detailliert beschrieben in "HANDBUCH DER KUNSTOFFADDITIVE", R. Gächter/H. Müller, Carl Hanser Verlag, 3. Aufl., 1989 und 4. Aufl. 2001, in DE 197.41.778 A1 und EP 0.967.245 A1 auf welche hiermit ausdrücklich Bezug genommen wird.

Die erfindungsgemäße Stabilisierung eignet sich insbesondere sowohl für halogenhaltige Polymerzusammensetzungen, die nicht weichgemachte bzw. weichmacherfreie oder im Wesentlichen weichmacherfreie Zusammensetzungen darstellen, als auch für weichgemachte Zusammensetzungen. Besonderes bevorzugt sind Anwendungen in Hart-PVC bzw. PVC-Halbhart.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, "Crash Pad"-Folien (Automobile), Rohre, Schaumstoffe, Schwerprofile (Fensterrahmen), Lichtwandprofile, Bauprofile, Folien, Blisterpackungen (auch hergestellt nach dem Luvithermverfahren), Profile, Sidings, Fittings, Bürofolien, Margarinebecher, Pralinenverpackungen und Apparategehäuse, Isolatoren, Computergehäuse und Bestandteile von Haushaltsgeräten sowie für Elektronikanwendungen insbesondere im Halbleiterbereich. Ganz besonders geeignet sind diese zur Herstellung von Fensterprofilen mit hohem Weißgrad und Oberflächenglanz.

Bevorzugte andere Zusammensetzungen in Form von Halbhart- und Weich-Rezepturen sind für Drahtummantelungen, Kabelisolierungen, Dekorationsfolien, Dachfolien, Schaumstoffe, Agrarfolien, Schläuche, Dichtungsprofile, Fußböden, Tapeten, KFZ-Teile, Weich-Folien, Spritzgussteile (Blasformen,), Bürofolien und Folien für Traglufthallen geeignet. Beispiele für die Anwendung der erfindungsgemäßen Zusammensetzungen als Plastisole sind Spielwaren (Rotationsformen), Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe" KUNSTSTOFFHANDBUCH PVC", Band 2/2, W. Becker/H. Braun, 2. Aufl. 1985, Carl Hanser Verlag, S. 1236-1277.

Ein weiterer Gegenstand der vorliegenden Erfindung ist die Verwendung eines erfindungsgemäßen Stabilisatorsystems zur Stabilisierung eines halogenhaltigen Polymers sowie die Verwendung einer erfindungsgemäßen Zusammensetzung zur Herstellung eines erfindungsgemäßen Gegenstandes.

Ein weiterer Gegenstand der vorliegenden Erfindung ist ein Verfahren zur Stabilisierung eines halogenhaltigen

Polymers, den Schritt enthaltend

- Zusetzen eines erfindungsgemäßen Stabilisatorsystems zu dem halogenhaltigen Polymer.

Experimenteller Teil

**I. Herstellung der Walzfelle:**

Die nach Tabelle 1.1 (R-1 und R-2) sowie 2.1 (R-3, R-4, R-5 und R-6) zubereiteten Trockenmischungen werden auf einem Collin-Labormeßwalzwerk (Modell: W100E, BJ: 2005, Fa. COLLIN) jeweils 5 Minuten (Walzendurchmesser: 110 mm, 10 UpM, Friktion: -10 %) bei der angegebenen Temperatur plastifiziert. Die so erhaltenen Folien (Dicke 0,3mm) werden weiteren Messungen zugeführt.

**II. Durchführung der Dehydrochlorierungsmessungen (DHC):**

Die DHC ist ein Maß für die HCl-Abspaltung von PVC, die bei thermischer Belastung stattfindet. Die abgespaltene Salzsäure wird mit Stickstoffgas in eine Vorlage mit dest. Wasser gespült und dort der Anstieg der Leitfähigkeit in Mikrosiemens pro Zentimeter (µS/cm) gemessen. Als Kennzahlen dienen die zugehörigen Minutenwerte [Min], die tabellarisch zusammengefasst werden. Je länger das Zeitintervall bei bestimmten Temperaturen zur Erreichung einer bestimmten Leitfähigkeit, desto thermostabiler ist die PVC-Probe.

Gerätetyp: PVC Thermomat 763 (Fa. Metrohm)

Die Messungen erfolgen nach DN 53381 Teil 1, Verfahren B: Leitfähigkeitsmessung.

| | | |
|---|---|---|
| Parameter: | Probeneinwaage: | 500 ± 0,5mg (Walzfellschnitzel) |
| | Temperatur: | °C (wie in den Beispielen angegeben) |
| | Flow: | 7 l/h (Stickstoff 5.0) |
| | Absorptionsvol.: | 60ml (VE-Wasser) |
| | Auswertung: | $t_{10}$, $t_{50}$ und $t_{200}$ (Leitfähigkeit von 10, 50 und 200 µS/cm - Angabe in Minutenwerten) |

**III. Durchführung des statischen Hitzetestes (SHT):**

Von den nach I hergestellten Walzfellen werden Teststreifen (15mm x 15mm) ausgeschnitten. Diese werden in einem METRASTAT-Testofen IR 700 (DR. STAPFER GmbH, Düsseldorf) bei der angegebenen Temperatur bis zur signifikanten Verfärbung belastet. Im Anschluß wird der YI-Wert (Yellowness-Index) nach DIN 53381 mit einem Spectro-Guide Farbmessgerät (Fa. BYK-GARDNER) bestimmt und mit dem YI-Wert des unbelasteten Walzfelles verglichen (Nullminutenwert). Die Ergebnisse werden tabellarisch zusammengefasst. Je kleiner der YI-Wert bei einem angegebenen Zeitpunkt, desto besser ist das Farbverhalten.

**Beispiel 1 (nicht erfindungsgemäß) : (Weich-PVC, Kabelrezeptur):** Folgende Trockenmischungen wurden hergestellt (Tab. 1.1)- Einwaage in Gew.-Teilen:

**Tab. 1.1: Formulierungen**

| Komponenten | (R-1) | (R-2) |
|---|---|---|
| PVC (Vinnolit S4170), K-Wert = 70 | 100 | 100 |
| Weichmacher1) (DINP) | 50 | 50 |
| Kreide2) (Polcarb 50 SV) | 50 | 50 |
| Antioxidans3) (BPA) | 0,43 | 0,43 |
| Zinkstearat4) | - | 1,0 |
| DMAU5) **(B2)** | 0,4 | - |

(fortgesetzt)

| Komponenten | (R-1) | (R-2) |
|---|---|---|
| TEAP 50[6)] | 0,32 | - |
| Calcium-Magnesium-Dioxid[7)] **(A3)** | 2,57 | - |
| Sorbacid 911[8)] | - | 2,57 |
| Summe Stabilisatormenge | 3,72 | 4,0 |
| 1) Diisononylphthalat, ex BASF<br>2) ex IMERYS<br>3) Bisphenol A, ex ALDRICH<br>4) ex ALDRICH<br>5) 6-Amino-1,3-dimethyluracil, ex ALDRICH<br>6) Catena-μ-2,2',2"-nitrilotrisethanol-perchlorato-Natrium (50% Aktivsubstanz, Eigenprodukt)<br>7) CeM-iX_115, ex BENE_FIT Systems GmbH & Co. KG, Hirschau, DE<br>8) ex SÜD-CHEMIE (entspr. Alcamizer 1) | | |

Formulierung (R-1) ist erfindungsgemäß (zinkfrei)- da **(A3)** + **(B2)** enthaltend, der Vergleich (R-2) ist ein nicht erfindungsgemäßer zinkbasierter Stabilisator.

Die Formulierungen (R-1) und (R-2) weisen folgende DHC-Werte auf (Tab. 1.2):

**Tab. 1.2: DHC-Werte** (200 °C) nach II, **Walzfelle:** 190 °C nach I

| Leitfähigkeit [μS/cm] | (R-1) [Min] | (R-2) [Min] |
|---|---|---|
| 10 | 148 | 97 |
| 50 | 176 | 116 |
| 200 | 244 | 147 |

Vergleicht man (R-1) mit (R-2), so ist gegenüber der nicht erfindungsgemäßen zinkhaltigen Formulierung (R-2) eine signifikante Verbesserung feststellbar (Übergang zu höheren Minutenwerten), d.h. die Thermostabilität ist deutlich verbessert worden.

Die Austestung der Rezepturen (R-1) und (R-2) zeigte im **SHT** folgendes Ergebnis (Tab. 1.3):

**Tab. 1.3: SHT** (190 °C) nach III

| Zeit [Min] | (R-1) [YI] | (R-2) [YI] |
|---|---|---|
| 3 | 23,5 | 25,0 |
| 6 | 23,4 | 26,5 |
| 9 | 23,5 | 27,0 |
| 12 | 23,7 | 27,6 |
| 15 | 24,0 | 28,1 |
| 18 | 24,1 | 28,2 |
| 21 | 24,4 | 28,7 |
| 24 | 24,7 | 29,7 |
| 27 | 25,1 | 30,1 |
| 30 | 25,2 | 30,6 |
| 33 | 25,5 | 31,4 |
| 36 | 26,0 | 32,1 |
| 39 | 26,4 | 33,1 |

(fortgesetzt)

| Zeit [Min] | (R-1) [YI] | (R-2) [YI] |
|---|---|---|
| 42 | 26,9 | 33,6 |
| 45 | 27,6 | 34,9 |
| 48 | 28,3 | 36,0 |
| 51 | 29,0 | 36,4 |
| 54 | 30,0 | 37,2 |
| 57 | 31,1 | 37,5 |
| 60 | 31,7 | 39,6 |

Wie ersichtlich, zeigt die erfindungsgemäße Kombination (R-1) gegenüber der nicht erfindungsgemäßen zinkhaltigen Formulierung (R-2) verbesserte Farbwerte in Bezug auf Anfangsfarbe-AF (bis 20 Min.), Farbhaltung-FH (bis 40 Min.) und Langzeitstabilität-LZ (bis 60 Min.). Dies bedeutet, daß die erfingungsgemäße Formulierung (R-1) der nicht erfindungsgemäßen zinkhaltigen Rezeptur (R-2) in der Wirksamkeit eindeutig überlegen ist, obwohl die Stabilisatormenge bei (R-1) mit 3,72 Teilen deutlich geringer ist als bei (R-2) mit 4,0 Teilen.

**Beispiel 2:** (**Hart-PVC,** Fensterrezptur):

Folgende Trockenmischungen wurden hergestellt (Tab. 2.1):

**Tab. 2.1: Formulierungen**

| Komponenten | (R-3) | (R-4) | (R-5) | (R-6) |
|---|---|---|---|---|
| PVC (Vinnolit S3268) K-Wert = 68 | 94 | 94 | 94 | 94 |
| PVC 9) (Vinnolit K 707) | 12 | 12 | 12 | 12 |
| Kreide (Omyalite 95T) | 6 | 6 | 6 | 6 |
| Titandioxid (Kronos 2220) | 4 | 4 | 4 | 4 |
| Gleitmittel 10) (LOXIOL G60) | 0,6 | 0,6 | 0,6 | 0,6 |
| Gleitmittel 11) (LOXIOL G22) | 0,1 | 0,1 | 0,1 | 0,1 |
| Gleitmittel 12) (Licowax WE 4 P) | 0,2 | 0,2 | 0,2 | 0,2 |
| Gleitmittel 13) (Licowax PE 520) | 0,2 | 0,2 | 0,2 | 0,2 |
| Irganox 1010 14) | 0,15 | 0,15 | 0,15 | 0,15 |
| DMAU 5) **(B2)** | 0,4 | - | - | - |
| TEAP 50 6) | 0,32 | - | - | - |
| THEIC 15) **(B1)** | 0,3 | 0,31 | 0,31 | 0,31 |
| Calcium-Magnesium-Dioxid 7) **(A3)** | 1,6 | - | 0,82 | 0,62 |
| Alcamizer 1 16) **(C)** | - | 0,82 | - | 0,20 |
| Calciumacetylacetonat 17) | - | 0,3 | 0,3 | 0,3 |
| Zinklaurat 18) | - | 0,75 | 0,75 | 0,75 |

(fortgesetzt)

| Komponenten | (R-3) | (R-4) | (R-5) | (R-6) |
|---|---|---|---|---|
| Calciumstearat [19] | 0,6 | 0,68 | 0,68 | 0,68 |
| [9] schlagzähmodifiziert auf Polyacrylatbasis (PA) (PVC:PA = 1:1)<br>[10], [11] ex COGNIS-OLEOCHEMICALS<br>[12],[13] ex CLARIANT<br>[14] ex CIBA SPEZIALITÄTENCHEMIE<br>[15] Trishydroxyethylisocyanurat, ex ALDRICH<br>[16] ex KYOWA CHEMICAL<br>[17] ex MCC Chemiehandel, Hamburg<br>[18], [19] ex PETER GREVEN Fettchemie | | | | |

Formulierung (R-3) ist erfindungsgemäß und zinkfrei - da **(A3)** + **(B1)** + **(B2)** enthaltend. Formulierungen (R-5) und (R-6) sind ebenfalls erfindungsgemäß aber zinkhaltig - da **(A3)** + **(B1)** bzw. **(A3)** + **(B1)** + **(C)** enthaltend. Der nicht-erfindungsgemäße Vergleich (R-4) ist ebenfalls zinkhaltig. (R-4) entspricht in seiner Zusammensetzung einem handelsüblichen Calcium-Zink-Stabilisator.

Die Formulierungen (R-3) bis (R-6) zeigen folgende DHC-Werte (Tab. 2.2):

**Tab. 2.2: DHC-Werte** (200 °C) nach II, **Walzfelle:** 195 °C nach I

| Leitfähigkeit [μS/cm] | (R-3) [Min] | (R-4) [Min] | (R-5) [Min] | (R-6) [Min] |
|---|---|---|---|---|
| 10 | 75 | 36 | 47 | 49 |
| 50 | 97 | 40 | 66 | 62 |
| 200 | 119 | 50 | 80 | 74 |

Wie ersichtlich zeigen die erfindungsgemäßen zinkhaltigen Formulierungen (R-5) und (R-6) gegenüber dem Vergleich (R-4), der ebenfalls zinkhaltig ist, eine signifikante Verbesserung in Bezug auf die 10-, 50- und 200-μS/cm-Werte. Die Wirksamkeit des zinkfreien erfindungsgemäßen Formulierung (R-3) muß als hervorragend beurteilt werden.

Die Austestung der Rezepturen (R-3) bis (R-6) zeigten im SHT folgendes Ergebnis (Tab. 2.3):

**Tab. 2.3: SHT** (190 °C) nach III

| Zeit [Min] | (R-3) [YI] | (R-4) [YI] | (R-5) [YI] | (R-6) [YI] |
|---|---|---|---|---|
| 0 | 0,5 | 2,4 | 1,6 | 1,1 |
| 3 | 0,5 | 3,6 | 1,6 | 1,5 |
| 6 | 0,5 | 4,0 | 2,1 | 1,6 |
| 9 | 0,5 | 4,3 | 1,9 | 2,1 |
| 12 | 0,4 | 4,6 | 1,8 | 1,9 |
| 15 | 0,8 | 5,2 | 2,5 | 2,5 |
| 18 | 0,9 | 6,4 | 2,7 | 2,7 |
| 21 | 1,1 | 7,3 | 3,8 | 3,4 |
| 24 | 1,5 | 9,1 | 4,0 | 3,7 |
| 27 | 1,9 | 10,4 | 4,9 | 4,3 |
| 30 | 2,4 | 12,1 | 6,5 | 5,1 |
| 33 | 3,3 | 13,7 | 8,7 | 5,8 |
| 36 | 4,3 | 16,8 | 11,6 | 6,9 |
| 39 | 5,3 | 18,3 | 14,8 | 7,9 |
| 42 | 6,4 | 20,2 | 18,3 | 9,3 |

(fortgesetzt)

| Zeit [Min] | (R-3) [YI] | (R-4) [YI] | (R-5) [YI] | (R-6) [YI] |
|---|---|---|---|---|
| 45 | 7,7 | 22,7 | 23,2 | 10,9 |
| 48 | 8,8 | 24,7 | 26,7 | 13,6 |
| 51 | 10 | 27,4 | 29,1 | 16,8 |
| 54 | 11,2 | 31,2 | 32,1 | 20,5 |
| 57 | 12,6 | 33,0 | 34,0 | 23,5 |
| 60 | 13,9 | 32,9 | 35,3 | 27,5 |

Wie zu ersehen, zeigen die erfindungsgemäßen zinkhaltigen Formulierungen (R-5) und (R-6) gegenüber dem ebenfalls zinkhaltigen Vergleich (R-4) eine signifikante Verbesserung in AF, FH und LZ (geringere YI-Werte), was durch den Komplett- bzw. Partialaustausch von Alcamizer 1 durch Calcium-Magnesium-Dioxid (bei Gewichtsgleichheit) bewerkstelligt werden konnte.

Die Wirksamkeit der erfindungsgemäßen zinkfreien Formulierung (R-3) ist ebenso wie in Beispiel 1 hervorragend.

## Patentansprüche

1. Stabilisatorsystem für halogenhaltige Polymere enthaltend einen Erdalkali-Doppelcarbonat-Kalk der Formel (A)

$$(M^1O)_m*(M^2O)_{n-m}*(CO_2)_o*(H_2O)_p \qquad (A)$$

mit

$M^1$ und $M^2$= verschiedene Erdalkalimetalle;
m = 0,9 bis 1,1;
n = 1,9 bis 2,1 und p = 0 bis 2,1 oder n = 3,9 bis 4,1 und p = 0 bis 4,1;
o = 0 bis 1,1

und mindestens eine der Verbindungen ausgewählt aus der Gruppe bestehend aus (B1) und (C), wobei

(B1) ein Tris-alkanol-isocyanurat ist und
(C) ein Erdalkaü-alumohydroxocarbonat der Formel (C)

$$Ca_yAl_2(OH)_{4+2y}CO_3*zH_2O \qquad (C)$$

mit y = 2 bis 8 und z = 0 bis 12 ist.

2. Stabilisatorsystem nach Anspruch 1, **dadurch gekennzeichnet, dass** der Erdalkali-Doppelcarbonat-Kalk (A) ein Huntitbranntkalk der Formel (A1)

$$(CaO)_m*(MgO)_{n-m}*(CO_2)_o \qquad (A1)$$

mit m = 0,9 bis 1,1; n = 3,9 bis 4,1 und o = 0 bis 1,1 ist.

3. Stabilisatorsystem nach Anspruch 1, **dadurch gekennzeichnet, dass** der Erdalkali-Doppelcarbonat-Kalk (A) ein Dolomitbranntkalk der Formel (A2)

$$(CaO)_m*(MgO)_{n-m}*(CO_2)_o \qquad (A2)$$

mit m = 0,9 bis 1,1; n = 1,9 bis 2,1 und o = 0 bis 1,1 ist.

4. Stabilisatorsystem nach Anspruch 3, **dadurch gekennzeichnet, dass** der Dolomitbranntkalk ein Calcium-Magne-

sium-Dioxid der Formel $CaMgO_2$ (A3) oder ein Calcium-Magnesium-Oxid-Carbonat der Formel $MgO*CaCO_3$ (A4) ist.

5. Stabilisatorsystem nach einem der Ansprüche 1 bis 4, **dadurch gekennzeichnet, dass** (B1) mindestens ein Trishydroxyethylisocyanurat ist.

6. Stabilisatorsystem nach einem der Ansprüche 1 bis 5, **dadurch gekennzeichnet, dass** wenigstens eine Verbindung (A), (A1), (A2), (A3) und (A4) in gecoateter Form vorliegt.

7. Zusammensetzung enthaltend ein halogenhaltiges Polymer und ein Stabilisatorsystem nach einem der Ansprüche 1 bis 6.

8. Zusammensetzung nach Anspruch 7, **dadurch gekennzeichnet, dass** bezogen auf 100 Gew.-Teile halogenhaltiges Polymer 0,05 bis 10 Gew.-Teile der Verbindung (A) und 0,05 bis 10 Gew.-Teile der Verbindung (B1) und/oder 0,005 bis 9 Gew.-Teile der Verbindung (C) enthalten sind.

9. Verfahren zur Stabilisierung eines halogenhaltigen Polymers den Schritt enthaltend

   • Zusetzen eines Stabilisatorsystems nach einem der Ansprüche 1 bis 6 zu dem halogenhaltigen Polymer.

10. Gebrauchsgegenstand enthaltend ein halogenhaltiges Polymer, welches durch ein Stabilisatorsystem nach einem der Ansprüche 1 bis 6 stabilisiert ist.

## Claims

1. Stabilizer system for polymers containing halogen, comprising an alkaline earth metal double carbonate of the formula (A)

$$(M^1O)_m*(M^2O)_{n-m}*(CO_2)_o*(H_2O)_p \qquad (A)$$

where

$M^1$ and $M^2$ = various alkaline earth metals;
m = from 0.9 to 1,1;
n = from 1.9 to 2.1 and p = from 0 to 2.1, or
n = from 3.9 to 4.1, and p = from 0 to 4.1;
o = from 0 to 1.1

and at least one of the compounds selected from the group consisting of (B1) and (C), where

(B1) is a tris(alkanol) isocyanurate and
(C) is an alkaline earth metal aluminohydroxocarbonate of the formula (C)

$$Ca_yAl_2(OH)_{4+2y}CO_3*zH_2O \qquad (C)$$

where y = from 2 to 8, and z = from 0 to 12.

2. Stabilizer system according to Claim 1, **characterized in that** the alkaline earth metal double carbonate (A) is a calcined huntite of the formula (A1)

$$(CaO)_m*(MgO)_{n-m}*(CO_2)_o \qquad (A1)$$

where m = from 0.9 to 1.1; n = from 3.9 to 4.1, and o = from 0 to 1.1.

3. Stabilizer system according to Claim 1, **characterized in that** the alkaline earth metal double carbonate (A) is a calcined dolomite of the formula (A2)

$$(CaO)_m*(MgO)_{n-m}*(CO_2)_o \qquad (A2)$$

where m = from 0.9 to 1.1; n = from 1.9 to 2.1, and o = from 0 to 1.1.

4. Stabilizer system according to Claim 3, **characterized in that** the calcined dolomite is a calcium magnesium dioxide of the formula $CaMgO_2$ (A3) or a calcium magnesium oxide carbonate of the formula $MgO*CaCO_3$ (A4).

5. Stabilizer system according to any of Claims 1 to 4, **characterized in that** (B1) is at least one trishydroxyethyl isocyanurate.

6. Stabilizer system according to any of Claims 1 to 5, **characterized in that** at least one compound (A), (A1), (A2), (A3), and (A4) is present in coated form.

7. Composition comprising a polymer containing halogen and a stabilizer system according to any of Claims 1 to 6.

8. Composition according to Claim 7, **characterized in that**, based on 100 parts by weight of polymer containing halogen, from 0.05 to 10 parts by weight of the compound (A) and from 0.05 to 10 parts by weight of the compound (B1) and/or from 0.005 to 9 parts by weight of compound (C) are present.

9. Process for stabilizing a polymer containing halogen, comprising the following step:

   • adding a stabilizer system according to any of Claims 1 to 6 to the polymer containing halogen.

10. Consumer article comprising a polymer containing halogen, and stabilized via a stabilizer system according to any of Claims 1 to 6.

**Revendications**

1. Système stabilisateur pour polymères contenant un halogène comprenant une chaux alcalinoterreuse à carbonate double de formule **(A)**

$$(M^1O)_{m*}(M^2O)_{n-m*}(CO_2)_{o*}(H_2O)_p \qquad \textbf{(A)}$$

où

$M^1$ et $M^2$ = différents métaux alcalinoterreux ;
m = 0,9 à 1,1 ;
n = 1,9 à 2,1 et p = 0 à 2,1 ou n = 3,9 à 4,1 et p = 0 à 4,1 ;
o = 0 à 1,1

et au moins l'un des composés choisis dans le groupe constitué de **(B1)** et **(C),** dans lequel

**(B1)** est un isocyanurate de tris-alcanol et
**(C)** est un aluminohydroxocarbonate alcalinoterreux de formule **(C)**

$$Ca_yAl_2(OH)_{4+2y}CO_3*zH_2O \qquad \textbf{(C)}$$

où y = 2 à 8 et z = 0 à 12.

2. Système stabilisateur selon la revendication **1, caractérisé en ce que** la chaux alcalinoterreuse à carbonate double **(A)** est une chaux vive de huntite de formule **(A1)**

$$(CaO)_{m*}(MgO)_{n-m}*(CO_2)_o \qquad \textbf{(A1)}$$

où m = 0,9 à 1,1 ; n = 3,9 à 4,1 et o = 0 à 1,1.

3. Système stabilisateur selon la revendication **1, caractérisé en ce que** la chaux alcalinoterreuse à carbonate double **(A)** est une chaux vive dolomitique de formule **(A2)**

$$(CaO)_{m*}(MgO)_{n-m}*(CO_2)_o \qquad \textbf{(A2)}$$

où m = 0,9 à 1,1 ; n = 1,9 à 2,1 et o = 0 à 1,1.

**4.** Système stabilisateur selon la revendication **3, caractérisé en ce que** la chaux vive dolomitique est un dioxyde de calcium-magnésium de formule $CaMgO_2$ **(A3)** ou un carbonate d'oxyde de calcium-magnésium de formule $MgO{*}CaCO_3$ **(A4).**

**5.** Système stabilisateur selon l'une des revendications **1** à **4, caractérisé en ce que (B1)** est au moins un isocyanurate de tris-hydroxyéthyle.

**6.** Système stabilisateur selon l'une des revendications **1** à **5, caractérisé en ce qu'**au moins un composé **(A), (A1), (A2), (A3)** et **(A4)** se présente sous une forme revêtue.

**7.** Composition comprenant un polymère contenant un halogène et un système stabilisateur selon l'une des revendications **1** à **6.**

**8.** Composition selon la revendication 7, **caractérisée en ce que**, par rapport à 100 parties en poids de polymère contenant un halogène, 0,05 à 10 parties en poids du composé **(A)** et 0,05 à 10 parties en poids du composé **(B1)** et/ou 0,005 à 9 parties en poids du composé **(C)** sont contenues.

**9.** Procédé de stabilisation d'un polymère contenant un halogène, comprenant l'étape suivante

- Addition d'un système stabilisateur selon l'une des revendications **1** à **6** au polymère contenant un halogène.

**10.** Objet utilitaire comprenant un polymère contenant un halogène qui est stabilisé par un système stabilisateur selon l'une des revendications **1** à **6.**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1046668 B1
- EP 0930332 B1
- EP 0422335 A
- EP 0945483 A
- US 2006188428 A
- EP 0945483 A1
- WO 2004096904 A1
- WO 9213914 A1
- DE 3843581 A1
- EP 0768336 A
- EP 1510545 A
- EP 0967209 A
- EP 0967208 A
- EP 0962491 A
- EP 1044968 A
- EP 433230 A
- US 4000100 A
- EP 0062813 A1
- WO 9320135 A
- DE 10217364 A1
- US 6531533 B
- US 6096820 A
- DE 4425266 A1
- EP 0549340 A1
- JP 0761756 A
- WO 9521127 A
- EP 0506831 A1
- US 3501264 A
- US 4221771 A
- EP 0394670 A1
- US 455055284 B
- WO 2006136191 A
- DE 102007050428
- WO 20060136191 A
- EP 0346279 A1
- EP 0307358 A1
- US 4339383 A
- EP 0433230 A
- EP 0734414 A1
- EP 0796888 B1
- EP 0506617 A
- EP 0259783 A1
- WO 0205206 A
- DE 19756913 A1
- DE 19927977 A1
- DE 19927978 A1
- DE 19927979 A1
- WO 2008023249 A
- DE 19741778 A1
- EP 0967245 A1


### In der Beschreibung aufgeführte Nicht-Patentliteratur


- Ullmann's Enzyklopädie der technischen Chemie. Verlag Schwarzenberg, 1960, vol. 12, 125
- Ullmann's Encyclopaedia of Ind. Chem. Verlag-Chemie, vol. 15, 611
- Dolomit- und Huntitkristallstrukturen in: Mineral Structure Data Base. **DOLLASE W. A.** Am. Mineral. University of Colorado, 1986, vol. 71
- Handbook of PVC Formulating. John Wiley & Sons, 1993
- TASCHENBUCH der Kunststoffadditive. 408-412
- **R. GÄCHTER ; H. MÜLLER.** TASCHENBUCH der Kunststoffadditive. Carl Hanser Verlag, 1989, 412-415
- **W.V. TITOW.** PVC Technology. Elsevier Publ, 1984, 165-170
- **BEYER, G.** *Journal of Fire Sciences,* 2007, vol. 25, 65-78
- **R. GÄCHTER ; H. MÜLLER.** Handbuch der Kunststoffadditive. Carl Hanser Verlag, 1989
- **E. J. WICKSON.** Handbook of Polyvinyl Chloride Formulating. J. Wiley & Sons, 1993
- **G. PRITCHARD.** Plastics Additives. Chapman & Hall, 1998
- **J. T. LUTZ ; D. L. DUNKELBERGER.** Impact Modifiers for PVC. John Wiley & Sons, 1992
- **R. GÄCHTER ; H. MÜLLER.** HANDBUCH DER KUNSTOFFADDITIVE. Carl Hanser Verlag, 1989
- **W. BECKER ; H. BRAUN.** KUNSTSTOFFHANDBUCH PVC. Carl Hanser Verlag, 1985, vol. 2/2, 1236-1277